# FASCICULE DE BREVET EUROPEEN

(11) **EP 2 989 593 B1**
(45) Date de publication et mention de la délivrance du brevet: **15.11.2023**
(21) Numéro de dépôt: 14729384.9
(22) Date de dépôt: 24.04.2014
(51) Int. Cl.: G06F 3/04883, G06F 40/171, G06F 40/274, G06V 10/98, G06V 30/32

(54) **SYSTEME DE SYNCHRONISATION PERMANENTE POUR LA SAISIE MANUSCRITE**
PERMANENTES SYNCHRONISATIONSSYSTEM FÜR HANDSCHRIFTLICHE EINGABE
PERMANENT SYNCHRONISATION SYSTEM FOR HANDWRITING INPUT

(30) Priorité: 24.04.2013 FR 1353746
(43) Date de publication de la demande: 02.03.2016
(73) Titulaire: MyScript, 44300 Nantes (FR)
(72) Inventeur: BAUDRY, Edgard, 44100 Nantes (FR); MANCEAU, Denis, 44430 Le Loroux-bottereau (FR); MELINAND, Robin, 44470 Carquefou (FR); BOEKHOORN, Arnoud, 44430 Le Loroux-bottereau (FR); TORNERI, Nicolas, 44470 Carquefou (FR)
(74) Mandataire: RVDB Nantes
(86) Numéro de dépôt international: PCT/FR2014/050991
(87) Numéro de publication internationale: WO 2014/174219

(56) Documents cités:
- EP-A1- 2 088 536
- JP-A- 2011 065 623
- US-A1- 2012 293 424
- US-A1- 2013 006 639
- MICHAEL SHILMAN ET AL: "CueTIP : A mixed-initiative interface for correcting handwriting errors", PROCEEDINGS OF THE 19TH ANNUAL ACM SYMPOSIUM ON USER INTERFACE SOFTWARE AND TECHNOLOGY, UIST '06, 1 janvier 2006 (2006-01-01), page 323, XP055102860, New York, New York, USA DOI: 10.1145/1166253.1166304 ISBN: 978-1-59-593313-3

## Description

### Arrière-plan de l'invention

La présente invention concerne la saisie d'objets graphiques par un utilisateur sur un dispositif à écran tactile et porte notamment sur la conversion de ces objets graphiques en chaînes de symboles par la voie d'un système de synchronisation permanente, aussi dit de synchronisation « persistante ».

L'invention porte plus particulièrement sur un dispositif et un procédé permettant de reconnaître des objets graphiques (de l'écriture manuscrite par exemple) saisis manuellement par un utilisateur puis de convertir, à partir de cette reconnaissance, les objets graphiques en chaînes de symboles correspondants, tels que des symboles alphanumériques par exemple.

Le développement des écrans tactiles capacitifs est l'un des facteurs clés à l'origine de la forte croissance qu'ont rencontré ces dernières années les téléphones mobiles intelligents, dits « Smartphones ». Contrairement aux écrans résistifs, leurs homologues capacitifs permettent l'utilisation à la fois des doigts et d'un stylet. L'utilisation des stylets a par ailleurs ouvert le champ des possibilités dans le domaine des systèmes d'écriture manuscrite sur écran tactile.

L'écriture manuscrite est un exercice mental naturel pour l'homme mais qui présente certaines difficultés du point de vue de la machine puisque celle-ci n'est pas capable d'apprendre à lire à proprement parler. La machine doit détecter les parties de l'écran tactile sur lesquelles l'utilisateur a passé son stylet ou son doigt et en déduire, via un processus de traitement complexe, les symboles numériques qui ont la plus grande probabilité de correspondre à la saisie de l'utilisateur.

De façon connue, des systèmes de saisie d'écriture manuscrite sont à présent exécutables sur des dispositifs à écran tactile dans le but de convertir de l'écriture manuscrite en écriture dite « numérique », c'est-à-dire en chaînes de caractères (ou symboles) générées par le dispositif. Pour ce faire, le système doit reconnaître les objets graphiques saisis manuellement par l'utilisateur (à l'aide d'un stylet ou d'un doigt par exemple) et retranscrire ceux-ci en symboles numériques.

Toutefois, la transcription d'une écriture manuscrite en écriture numérique présente toujours de nombreux défis non résolus à ce jour. En particulier, la miniaturisation croissante des appareils tactiles permettant ce type de conversion (téléphones portables...) nécessite d'adapter les méthodes de saisie et de reconnaissance actuelles qui ne peuvent plus être appliquées comme sur des écrans tactiles de grande taille (e.g. sur les grandes tablettes ou ordinateurs portables). Des systèmes pour la saisie, et la ré-édition de saisie sont connus par exemple de JP2011065623A.

Par ailleurs, les systèmes actuels n'offrent pas de fonctionnalités satisfaisantes en termes notamment de navigation dans le texte précédemment saisi par l'utilisateur ou encore en termes d'édition de ce texte.

Il existe donc un besoin pour une solution permettant la saisie d'objets graphiques en vue de les convertir en symboles numériques, et plus particulièrement, pour un dispositif, et un procédé correspondant, permettant la saisie et éventuellement l'édition d'objets graphiques afin d'entrer des chaînes de symboles dans un champ d'entrée d'une application en cours d'exécution sur le dispositif.

### Objet et résumé de l'invention

La présente invention est définie dans le jeu de revendications exposé ci-après.

A cet effet, la présente invention concerne un dispositif de saisie apte à être utilisé par un utilisateur pour entrer des symboles dans un champ d'entrée d'une application pouvant être exécutée sur ledit dispositif, le dispositif comprenant :
- une unité d'interface comprenant un écran tactile, l'unité d'interface permettant la saisie manuelle et l'affichage, dans une zone de saisie dudit écran, d'objets graphiques ; et
- un module de traitement d'objets graphiques, le module de traitement comprenant, pour le traitement de chaque objet graphique courant :
   - une unité de détection d'un début de saisie et d'une fin de saisie dudit objet graphique courant dans ladite zone de saisie ;
   - une unité d'enregistrement apte, sur détection d'un début de saisie de l'objet graphique courant, à enregistrer des données graphiques correspondant à l'objet graphique courant tout au long de sa saisie ;
   - une unité de reconnaissance configurée pour générer une liste de chaînes candidates d'au moins un symbole à partir desdites données graphiques, chacune des chaînes candidates étant associée à une valeur de pertinence représentative de la pertinence de ladite chaîne candidate vis-à-vis desdites données graphiques ; et
   - une unité d'insertion configurée pour insérer dans le champ d'entrée une chaîne sélectionnée par l'utilisateur dans la liste ou, à défaut, une chaîne sélectionnée parmi les chaînes candidates en fonction de sa pertinence.

Dans le dispositif de saisie de l'invention, les moyens d'enregistrement sont configurés pour stocker, en association avec les données graphiques, les chaînes candidates et leur valeur de pertinence associée, ainsi qu'un identifiant de ladite chaîne sélectionnée, ladite association formant un premier groupe de données, et pour conserver en mémoire ledit premier groupe de données pendant une première durée prédéterminée.

Selon un mode de réalisation particulier, le premier groupe de données est conservé en mémoire pendant la première durée prédéterminée allant au moins jusqu'à la saisie d'un objet graphique ultérieure ou, dans une mise en oeuvre particulière, jusqu'à la fin de la saisie d'un objet graphique ultérieur.

Selon un mode de réalisation particulier, le premier groupe de données est conservé en mémoire au moins jusqu'à l'initiation du traitement par l'unité de traitement d'un objet graphique ultérieur.

Selon un mode de réalisation particulier, le premier groupe de données est conservé jusqu'à détection, par le module de traitement, d'un signal de fin de saisie d'objet graphique.

Ce stockage permet de maintenir une connexion permanente entre les différentes données constituant chaque groupe de données, à savoir : les données graphiques, les chaînes candidates, les valeurs de pertinence associées et la chaîne sélectionnée (ou du moins son identifiant). Le maintien de cette connexion (ou association), y compris pendant la saisie d'objets graphiques ultérieures, permet de conserver de façon cohérente l'ensemble des données pertinentes de la saisie, en vue par exemple de son utilisation ultérieure dans le cadre notamment de la navigation ou de l'édition qui seront définies plus en détail ultérieurement.

Dans un mode de réalisation particulier, le premier groupe de données est configuré pour maintenir une connexion permanente entre les données graphiques, les chaînes candidates, les valeurs de pertinences associées, et la chaîne sélectionnée de façon à ce que, en réponse à une modification desdites données graphiques, l'unité de reconnaissance modifie les chaînes candidates et les valeurs de pertinence associées stockées dans ledit premier groupe de données et l'unité d'insertion modifie ladite chaîne insérée stockée dans ledit premier groupe de données.

Dans le dispositif de saisie de l'invention, l'unité d'insertion est configurée, en réponse à une commande prédéterminée, pour remplacer dans le champ d'entrée ladite chaîne sélectionnée par une autre chaîne candidate choisie par l'utilisateur parmi ladite liste de chaînes candidates postérieurement à ladite insertion de la chaîne sélectionnée dans ledit champ d'entrée.

De façon avantageuse, la conservation en mémoire du premier groupe de donnée pendant la première durée prédéterminée permet ainsi la correction ultérieure de ladite chaîne sélectionnée dans le champ d'entrée. Si par exemple l'utilisateur réalise que la chaîne candidate qui a été initialement insérée dans le champ d'entrée (automatiquement ou sur sélection de l'utilisateur) n'est pas appropriée, il peut corriger plus tard cette erreur dans le champ d'entrée en y remplaçant la chaîne initialement sélectionnée par une autre chaîne candidate choisie par l'utilisateur (ou le système) parmi la liste de chaînes candidates conservée en mémoire dans le premier groupe de données.

Dans un mode de réalisation particulier, le module de traitement est configuré pour que l'écran tactile affiche la liste de chaînes candidates selon un ordre de pertinence décroissante déterminé à partir desdites valeurs de pertinence.

Dans un mode de réalisation particulier, l'unité d'insertion est configurée pour insérer dans le champ d'entrée ladite chaîne la plus pertinente, l'unité d'insertion étant configurée pour remplacer le cas échéant dans le champ d'entrée ladite chaîne la plus pertinente par une autre chaîne candidate sélectionnée par l'utilisateur au moyen de l'unité d'interface.

Dans un mode de réalisation particulier, l'unité d'interface est configurée, lorsque la fin de saisie de l'objet graphique courant a été détectée et si aucun début de saisie d'un objet graphique ultérieur n'a été détecté dans un temps prédéterminé à compter de ladite détection de fin saisie, pour décaler l'affichage de l'objet graphique courant dans la zone de saisie de façon à libérer dans ladite zone de saisie de l'espace pour saisir un objet graphique ultérieur.

Dans un mode de réalisation particulier, le temps prédéterminé est fonction de la position de l'objet graphique courant dans la zone de saisie.

Dans un mode de réalisation particulier, le temps prédéterminé est fonction de la longueur cumulée du tracé suivant l'axe principal de saisie du ou des objets graphiques en cours d'affichage dans la zone de saisie.

Dans un mode de réalisation particulier, l'unité d'interface est configurée, une fois ledit décalage effectué, pour afficher dans la zone de saisie un indicateur graphique définissant une région de la zone de saisie adjacente à l'objet graphique courant. Si l'unité de détection détecte un début de saisie d'un objet graphique ultérieur dans ladite région, l'unité d'enregistrement est configurée pour enregistrer les données graphiques de l'objet graphique ultérieur toute au long de sa saisie en association avec les données graphiques du premier groupe de données.

Dans un mode de réalisation particulier, l'unité d'interface est configurée, une fois ledit décalage effectué, pour afficher dans la zone de saisie un indicateur graphique définissant une région de la zone de saisie adjacente à l'objet graphique courant. Si l'unité de détection détecte un début de saisie d'un objet graphique ultérieur hors de ladite région, l'unité d'enregistrement est configurée pour enregistrer les données graphiques de l'objet graphique ultérieur tout au long de sa saisie dans un second groupe de données indépendant dudit premier groupe de données.

Dans un mode de réalisation particulier, si l'unité d'interface détecte le début de saisie de l'objet graphique ultérieur hors de ladite région de la zone de saisie, l'unité d'insertion valide ladite chaîne sélectionnée.

Dans un mode de réalisation particulier, le module de traitement est configuré, après une deuxième durée prédéterminée à compter de ladite validation, pour que l'objet graphique courant soit affiché en caractères d'imprimerie, les moyens d'enregistrement conservant en mémoire ledit premier groupe de données pendant ladite première durée prédéterminée.

L'indicateur graphique représente par exemple un espace libre dans la zone de saisie entre l'objet graphique courant et une partie vierge de la zone de saisie.

Dans un mode de réalisation particulier, dans lequel les symboles dans chacune desdites chaînes des caractères sont conformes au standard Unicode.

Dans un mode de réalisation particulier, chaque dit objet graphique représente un symbole en écriture manuscrite.

Dans un mode de réalisation particulier, le module de traitement est configurée, en réponse à une première interaction prédéterminée de l'utilisateur avec ledit dispositif, pour afficher dans le champ d'entrée au moins l'une quelconque desdites chaînes précédemment insérées qui n'était plus en cours d'affichage dans le champ d'entrée au moment de ladite première interaction.

Le module de traitement peut en outre être configurée pour afficher dans ladite zone de saisie au moins une portion d'un objet graphique correspondant à l'une desdites chaînes dont l'affichage dans le champ d'entrée a été commandé par ladite première interaction prédéterminée.

Selon un aspect particulier de l'invention, le module de traitement est configuré pour que ladite première interaction prédéterminée soit réalisée par l'utilisateur en appliquant un point de contact sur l'écran tactile au niveau du champ d'entrée et en déplaçant ledit point de contact afin de déclencher un défilement desdites chaînes dans le champ d'entrée jusqu'à l'affichage de la chaîne souhaitée.

Selon un aspect particulier de l'invention, le module de traitement est configuré pour contrôler l'affichage en temps réel dans la zone de saisie d'objets graphiques en correspondance avec ledit défilement imprimé par le déplacement du point de contact.

Selon un aspect particulier de l'invention, le module de traitement est configuré pour que ladite première interaction prédéterminée soit réalisée par l'utilisateur en appliquant un point de contact sur l'écran tactile au niveau d'une barre de défilement affichée sur l'écran tactile et en déplaçant ledit point de contact le long de ladite barre de défilement afin de déclencher un défilement en temps réel desdites chaînes dans le champ d'entrée jusqu'à l'affichage de la chaîne souhaitée.

Dans un mode de réalisation particulier, le module de traitement est configuré, en réponse à une deuxième interaction prédéterminée de l'utilisateur avec ledit dispositif, pour afficher dans la zone de saisie au moins un quelconque objet graphique précédemment saisi qui n'était plus en cours d'affichage dans la zone de saisie au moment de ladite deuxième interaction prédéterminée.

Le module de traitement peut en outre être configuré pour afficher dans le champ d'entrée au moins une portion d'une dite chaîne sélectionnée correspondant à l'un desdits objets graphiques dont l'affichage dans la zone de saisie a été commandé par ladite deuxième interaction prédéterminée.

Selon un aspect particulier de l'invention, le module de traitement est configuré pour que ladite deuxième interaction prédéterminée soit réalisée par l'utilisateur en appliquant un point de contact sur l'écran tactile au niveau de la zone de saisie et en déplaçant ledit point de contact afin de déclencher un défilement en temps réel des objets graphiques dans la zone de saisie jusqu'à l'affichage de l'objet graphique souhaité.

Selon un aspect particulier de l'invention, le module de traitement est configuré pour contrôler l'affichage en temps réel dans le champ d'entrée de dites chaînes sélectionnées en correspondance avec ledit défilement imprimé dans la zone de saisie par le déplacement du point de contact.

Dans un mode de réalisation particulier, le module de traitement est configuré pour afficher, lors dudit défilement dans le champ d'entrée, un marqueur pour repérer une chaîne dite chaîne active pouvant être éditée par l'utilisateur.

Dans un mode de réalisation particulier, le module de traitement est configuré, lorsque l'utilisateur saisit un nouvel objet graphique en superposition d'un objet graphique précédemment saisi qui est en cours d'affichage dans la zone de saisie, pour mette à jour le groupe de données stocké de l'objet graphique précédemment saisi avec : les données graphiques du nouvel objet graphique, la liste de chaînes candidates et les valeurs de pertinences associées générées par l'unité de reconnaissance pour le nouvel objet graphique, et la chaîne sélectionnée par l'unité d'insertion pour le nouvel objet graphique.

Dans un mode de réalisation particulier, le module de traitement est configuré pour permettre à l'utilisateur d'éditer au moyen de l'unité d'interface une chaîne en cours d'affichage dans le champ d'entrée, le groupe de données de ladite chaîne éditée étant modifié en réponse à cette édition par le module de traitement et stocké par les moyens d'enregistrement.

Selon un aspect particulier de l'invention, pour éditer un objet graphique, le module de traitement permet à l'utilisateur de sélectionner au moyen de l'écran tactile ledit objet graphique à éditer.

Cette sélection peut par exemple être réalisée par l'application d'un point de contact sur l'écran tactile au niveau de l'objet graphique à éditer, ladite sélection déclenchant la sélection en tant que chaîne active de la chaîne correspondante insérée dans le champ d'entrée.

Dans un mode de réalisation particulier, le module de traitement est configuré, en réponse à une troisième interaction prédéterminée d'un utilisateur avec ledit dispositif, pour insérer de l'espace entre deux objets graphiques en cours d'affichage dans la zone de saisie.

Dans un mode de réalisation particulier, l'unité de reconnaissance est configurée pour débuter la génération de ladite liste de chaînes candidates d'au moins un symbole dès détection d'un début de saisie de l'objet graphique courant.

Selon une variante de réalisation, l'unité de reconnaissance est configurée pour générer ladite liste de chaînes candidates d'au moins un symbole sur détection d'une fin de saisie de l'objet graphique courant.

La présente invention concerne également un procédé de saisie mise en oeuvre par un dispositif de saisie apte à être utilisé par un utilisateur pour entrer des symboles dans un champ d'entrée d'une application pouvant être exécutée sur ledit dispositif, le dispositif comprenant une interface comprenant un écran tactile, l'interface permettant la saisie manuelle et l'affichage, dans une zone de saisie de l'écran, d'objets graphiques,
le procédé comprenant un traitement d'objets graphiques, ledit traitement comprenant pour chaque objet graphique courant :
- la détection d'un début de saisie et d'une fin de saisie dudit objet graphique courant dans ladite zone de saisie ;
- l'enregistrement, sur détection d'un début de saisie de l'objet graphique courant, des données graphiques correspondant audit objet graphique courant tout au long de sa saisie ;
- la génération d'une liste de chaînes candidates d'au moins un symbole à partir desdites données graphiques, chacune desdites chaînes candidates étant associée à une valeur de pertinence représentative de la pertinence de ladite chaîne candidate vis-à-vis desdites données graphiques ; et
- l'insertion dans ledit champ d'entrée d'une dite chaîne sélectionnée par l'utilisateur dans ladite liste ou, à défaut, d'une dite chaîne sélectionnée parmi les chaînes candidates en fonction de sa pertinence.

Le procédé comprend le stockage en mémoire, en association avec les données graphiques, des chaînes candidates et de leur valeur de pertinence associée, ainsi que d'un identifiant de la chaîne sélectionnée, ladite association formant un premier groupe de données, et la conservation en mémoire dudit premier groupe de données pendant une première durée prédéterminée.

Des variantes du procédé de saisie analogues aux modes de réalisation et variantes mentionnés ci-dessus en relation avec le dispositif de saisie de l'invention sont également envisageables dans le cadre de l'invention.

Dans un mode particulier de réalisation, les différentes étapes du procédé de saisie sont déterminées par des instructions de programmes d'ordinateurs.

En conséquence, l'invention vise aussi un programme d'ordinateur sur un support d'informations (ou support d'enregistrement), ce programme étant susceptible d'être mis en oeuvre dans un dispositif de saisie ou plus généralement dans un ordinateur, ce programme comportant des instructions adaptées à la mise en oeuvre des étapes d'un procédé de saisie tel que défini ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations (ou support d'enregistrement) lisible par un dispositif de saisie, et plus généralement par un ordinateur, ce support comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy dise) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures:
- la figure 1A et 1B représente schématiquement un dispositif de saisie conforme à un mode de réalisation particulier de l'invention ;
- la figure 2 représente, de manière schématique, l'architecture matérielle d'un dispositif de saisie conforme à un mode de réalisation particulier de l'invention ;
- les figures 3A à 3F représentent schématiquement un dispositif de saisie à différentes étapes de la mise en oeuvre d'un procédé de saisie conforme à un premier mode de réalisation de l'invention ;
- les figures 4A à 4C représentent, sous la forme de tableaux, des groupes de données stockés par le dispositif de saisie lors de différents stades de la mise en oeuvre du procédé de saisie représenté en figures 3A-3F ;
- la figure 5 représente, sous forme d'un ordinogramme, les principales étapes du procédé de saisie conforme au premier mode de réalisation de l'invention ;
- les figures 6A à 6F représentent, de façon schématique, un dispositif de saisie à différentes étapes de la mise en oeuvre d'un procédé de saisie conforme à un deuxième mode de réalisation de l'invention ;
- les figures 7A et 7B représentent, sous la forme de tableaux, des groupes de données stockés par le dispositif de saisie lors de différents stades de la mise en oeuvre du procédé de saisie représenté en figures 6A-6F ;
- la figure 8 représente, sous forme d'un ordinogramme, les principales étapes du procédé de saisie conforme au deuxième mode de réalisation de l'invention ;
- les figures 9A, 9B et 11A représentent schématiquement un exemple de dispositif de saisie fonctionnant selon un troisième mode de réalisation de l'invention ;
- la figure 9C représente le champ d'entrée d'une application en cours d'exécution sur le dispositif de saisie selon le troisième mode de réalisation de l'invention ;
- la figure 9D représente une variante de réalisation dans laquelle une barre de défilement affichée à l'écran permet à l'utilisateur de contrôler un défilement dans le champ d'entrée ;
- la figure 10 représentent, sous la forme d'un tableau, des groupes de données stockés par le dispositif de saisie des figures 9A et 9B ; et
- les figures 11B à 11G représentent schématiquement des exemples de mise en oeuvre de fonctions d'édition par le dispositif de saisie de l'invention.

### Description détaillée de plusieurs modes de réalisation

La présente invention concerne la conversion d'objets graphiques saisis par un utilisateur en chaînes de symboles et porte plus particulièrement sur un dispositif et un procédé permettant de reconnaître des objets graphiques (de l'écriture manuscrite par exemple) saisis manuellement par un utilisateur puis de convertir, à partir de cette reconnaissance, les objets graphiques en chaînes de symboles correspondants, tels que des symboles alphanumériques par exemple.

Dans ce document, des exemples de mise en oeuvre de l'invention sont décrits dans le cadre de la conversion d'écriture manuscrite en chaînes de symboles en format Unicode. L'invention peut toutefois s'appliquer à la conversion d'autres types d'objets graphiques saisis par un utilisateur et ce, afin d'obtenir des symboles (ou caractères) de format quelconque.

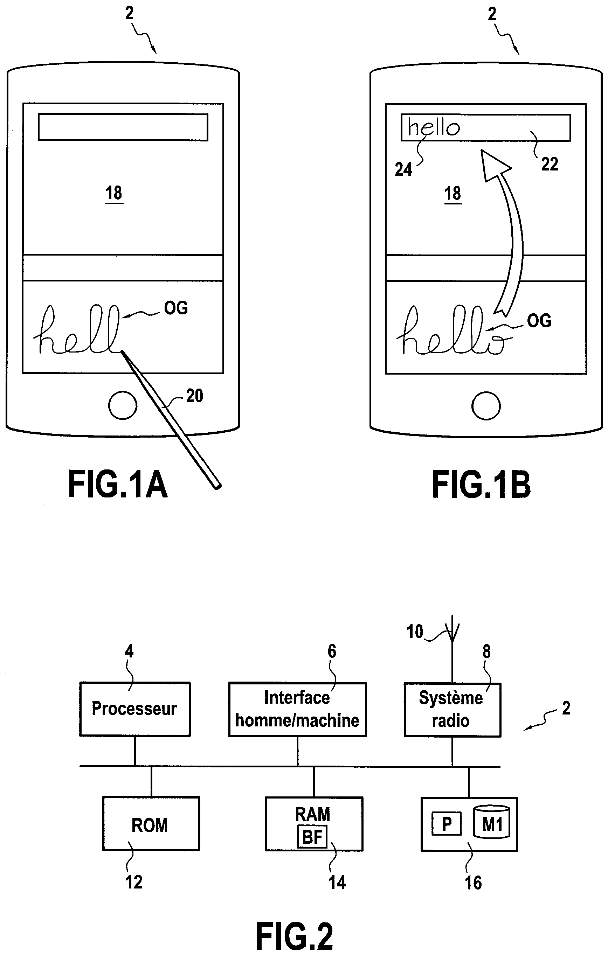

Les **figures 1A et 1B** représentent schématiquement un dispositif de saisie 2 selon un premier mode de réalisation particulier de l'invention. En substance, le dispositif 2 décrit dans cet exemple est un téléphone mobile muni d'un écran tactile 18. A l'aide d'un stylet 20 (ou, alternativement, de son doigt par exemple), l'utilisateur saisit un objet graphique OG sur la partie inférieure de l'écran tactile 18. L'objet graphique correspond ici à de l'écrite manuscrite (le mot « hello »).

Le dispositif de saisie 2 est configuré pour reconnaître l'objet graphique OG saisi manuellement par l'utilisateur, puis d'insérer dans un champ d'entrée 22 une chaîne de symboles 24 correspondante obtenue à partir de ladite reconnaissance. Le champ d'entrée 22 constitue dans cet exemple le champ d'une application en cours d'exécution sur le dispositif 2. Le champ d'entrée 22 peut par exemple être le champ d'entrée d'une application (telle qu'un moteur de recherche) dans un navigateur Internet ou encore le champ d'entrée d'une application de messagerie (envoi SMS par exemple).

On comprendra que le dispositif de saisie 2 peut prendre la forme d'un appareil quelconque (portable ou non) muni d'un écran tactile et apte à convertir de tels objets graphiques en symboles numériques (tablettes, PDA...).

Par ailleurs, une dite chaîne de symboles (ou de caractères) peut comprendre un ou plusieurs symboles, ce ou ces symboles étant représentatifs d'un ou de plusieurs objets graphiques saisis par l'utilisateur.

La **figure 2** représente, de manière schématique, l'architecture matérielle du dispositif de saisie 2 conformément au premier mode de réalisation de l'invention. Plus particulièrement, le dispositif 2 comprend notamment un processeur 4, une unité d'interface 6, un système radio 8 connecté à une antenne radio 10, une mémoire morte (de type ROM) 12, une mémoire volatile réinscriptible (de type RAM) 14 et une mémoire non volatile réinscriptible 16. Un bus permet la communication entre ces composants.

Le dispositif 2 peut également comprendre des ports et autres composants classiques qui ne sont pas pertinents pour la description de l'invention et dont les caractéristiques et fonctionnement ne seront donc pas décrits dans ce document.

Dans l'exemple envisagé ici, la mémoire non volatile réinscriptible 16 est une mémoire de type Flash. On comprendra cependant que d'autres types de mémoires non volatiles réinscriptibles pourront être envisagés par l'homme du métier, comme les mémoires de type Flash NAND par exemple.

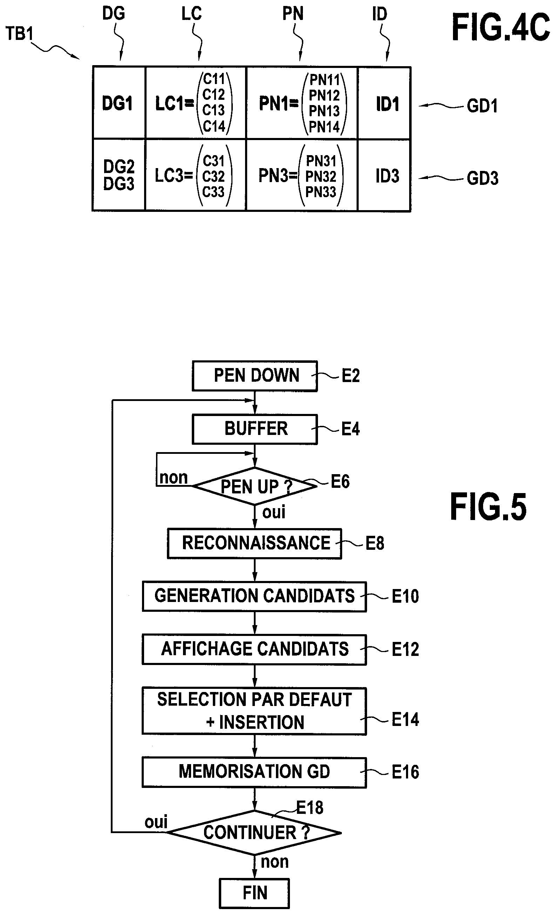

Cette mémoire non volatile réinscriptible 16 constitue ici un support d'enregistrement conforme à l'invention, lisible par le processeur 4, et sur lequel est enregistré un programme d'ordinateur P conforme au premier mode de réalisation l'invention. Ce programme P comporte des instructions pour l'exécution des étapes d'un procédé de saisie selon l'invention. Les principales étapes E2 à E18 de ce procédé sont représentées, dans un mode particulier de réalisation de l'invention, sur la **figure 5** décrite ultérieurement.

La mémoire 16 comprend une unité de mémoire M1 dont l'usage sera décrit plus en détail ultérieurement.

L'unité d'interface 6 constitue une interface homme/machine permettant à un utilisateur de saisir manuellement des objets graphiques, et permettant en outre l'affichage de ces objets graphiques sur le dispositif 2. Plus généralement, l'unité d'interface 6 permet le contrôle du dispositif 2 par l'utilisateur. Cette unité d'interface 6 comprend un écran tactile 18 et peut comprendre en outre des haut-parleurs, des touches mécaniques et/ou tous autres moyens permettant une quelconque interaction homme/machine.

La mémoire RAM 14 permet notamment d'enregistrer des données dans une mémoire tampon (ou « buffer ») BF lors de l'exécution du procédé de saisie de l'invention. L'utilisation de cette mémoire tampon BF sera décrite plus en détail ultérieurement.

Dans une variante de réalisation, toutes les mémoires utilisées dans le dispositif sont de type Flash.

Le système radio 8 permet ici au téléphone mobile 2 de communiquer de manière conventionnelle selon la norme 3G ou 4G par exemple. La partie radio n'est cependant pas nécessaire pour la réalisation de l'invention et ne sera pas décrite plus en détail dans la suite de ce document.

Le premier mode de réalisation de l'invention est à présent décrit plus en détail en référence aux **figures 2 à 5****.** Plus précisément, le dispositif de saisie 2 met en oeuvre le procédé de saisie de l'invention en exécutant le programme P.

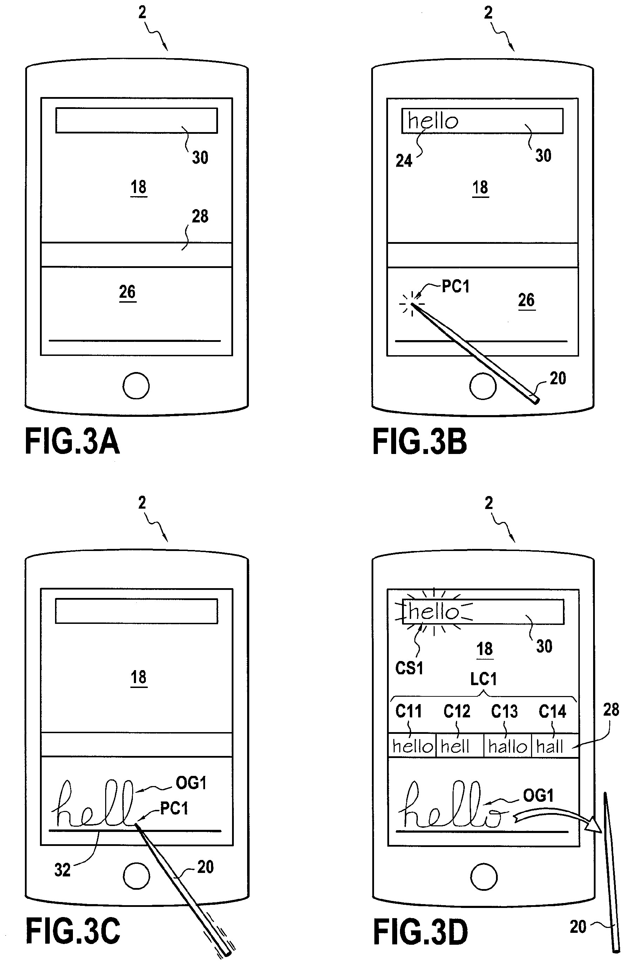

Dans ce premier mode de réalisation, l'écran tactile 18 du dispositif 2 comprend **(****figure 3A****)** :
- une zone de saisie 26 dans laquelle l'utilisateur peut saisir des objets graphiques manuellement, à l'aide par exemple d'un stylet 20 et/ou d'un doigt ;
- une zone d'affichage 28 apte à afficher des chaînes de symboles candidates générées par le dispositif 2 ; et
- le champ d'entrée 30 déjà décrit ci-avant dans lequel le dispositif 2 insère des symboles correspondants aux objets graphiques saisis par l'utilisateur dans la zone de saisie 26.

Dans cet exemple, la zone de saisie 26 comprend une ligne d'écriture 32 facultative (dite « base line » en anglais) indiquant à l'utilisateur où écrire sur l'écran tactile 18.

Dans ce mode de réalisation, le processeur 4 comprend :
- une unité de détection,
- une unité d'enregistrement,
- une unité de reconnaissance, et
- une unité d'insertion.

Dans cet exemple, ces unités sont mises en oeuvre par le même processeur 4 en coopération avec les autres composants du dispositif 2 pour mettre en oeuvre un procédé de saisie selon le premier mode de l'invention. D'autres mises en oeuvre de l'invention sont toutefois envisageables.

Le processeur 4 constitue ici un module de traitement au sens de l'invention.

En **figure 3B****,** l'utilisateur commence à saisir du texte dans la zone de saisie 26 à l'aide du stylet 20. L'unité de détection du dispositif 2 est apte à détecter le début et la fin de saisie d'objets graphiques dans la zone de saisie 26.

Au cours d'une étape E2, le dispositif 2 (i.e. son unité de détection) détecte le point de contact PC1 appliqué par l'utilisateur à l'aide de son stylet 20 dans la zone de saisie 26 de l'écran tactile 18. L'évènement de la détection du contact stylet sur la partie 26 de l'écran tactile (évènement appelé « pen down » dans la suite de ce document) déclenche le traitement du premier objet graphique courant noté OG1 par le dispositif 2.

Dans cet exemple, l'utilisateur écrit de façon manuscrite le mot « hello » dans la zone de saisie 26 en faisant glisser la pointe du stylet 20 au-dessus de la ligne d'écriture 32 **(****figure 3C****).** L'unité de détection du dispositif 2 détecte (E4) le glissement du point de contact PC1 dans la zone de saisie 26.

Tout au long de la saisie, le dispositif 2 (i.e. son unité d'enregistrement) enregistre (E4) des données graphiques DG1 correspondant à l'objet graphique OG1 en cours de saisie.

De manière générale, les données graphiques que peut générer le dispositif 2 (i.e. le module de traitement 4) lors de l'exécution du procédé de saisie sont représentatives de « l'encre digitale » déposée par l'utilisateur dans la zone de saisie 26. Les données graphiques DG1 correspondent par exemple aux différentes coordonnées physiques du point de contact glissant PC1 tout au long de la saisie. Ces coordonnées graphiques peuvent prendre en compte d'autres informations telles que la force de pression appliquée par l'utilisateur sur l'écran tactile 18, par exemple. Le langage et le format utilisés pour les données graphiques peuvent être quelconques.

Dans cet exemple, l'enregistrement E4 des données graphiques DG1 de l'objet OG1 est réalisé en temps réel dans la mémoire tampon BF. Cet enregistrement se poursuit jusqu'à ce qu'un évènement dit « pen up » soit détecté (E6) par l'unité de détection **(****figure 3D****).** Un évènement « pen up » survient lorsque le dispositif 2 détecte la fin de la saisie d'un objet graphique courant (OG1 dans le cas présent), cette fin de saisie se traduisant par la disparition du point de contact (PC1 dans ce cas) dans la zone de saisie 26. Cette fin de saisie résulte ici de la levée du stylet 20 par l'utilisateur.

Sur détection de la fin de saisie de l'objet graphique OG1, le dispositif 2 (i.e. l'unité de reconnaissance) réalise un traitement de reconnaissance (E8) sur les données graphiques DG1 (stockées ici dans la mémoire tampon BF) et génère (E10) une liste LC1 de chaînes de symboles candidates C11 à C14 à partir desdites données graphiques DG1.

Comme expliqué plus en détail ultérieurement, des modes de réalisation alternatifs sont toutefois envisageables où les étapes E8 et E10 ci-dessus sont déclenchées sur détection d'un début (et non d'une fin) de la saisie de l'objet graphique courant, c'est-à-dire sur détection du point de contact PC1 au début de la saisie de l'objet graphique OG1 dans le cas présent.

Au cours de l'étape E10, chaque chaîne candidate C11-C14 (comprenant au moins un symbole) est choisie par le dispositif 2 pour sa représentativité vis-à-vis de l'objet graphique OG1 saisi manuellement par l'utilisateur. De telles techniques de reconnaissance sont déjà connues à ce jour et ne seront donc pas décrites en détail dans ce document.

Chacune des chaînes candidates C11-C14 générées par l'unité de reconnaissance est associée à une valeur de pertinence respective PN11-PN14 (notées collectivement PN1) représentative de la pertinence de la chaîne candidate vis-à-vis des données graphiques DG1. Ces valeurs de pertinences générées par l'unité de reconnaissance permettent d'identifier la chaîne candidate la plus pertinente et, le cas échéant, de classer les chaînes candidates C11-C14 selon leur ordre de pertinence.

Le dispositif 2 affiche (E12) ici la liste LC1 de chaînes candidates C11 à C14 dans la zone d'affichage 28. Bien que cela ne soit pas obligatoire, l'affichage est réalisé de préférence selon un ordre de pertinence décroissante (par exemple de la gauche vers la droite ; C11 étant ici la chaîne la plus pertinente et C14 la chaîne la moins pertinente) dans la zone 28 **(****figure 3D****).** Le classement par ordre décroissant de pertinence est réalisé à partir des valeurs de pertinence PN11 à PN14, d'autres exemples de classements étant naturellement envisageables.

Le nombre de chaînes candidates peut varier selon l'objet graphique détecté et selon la technique de reconnaissance utilisée. Chaque liste de chaînes candidates comprend au moins une chaîne candidate.

Le dispositif 2 (i.e. son unité d'insertion) est configuré pour insérer (E14) dans le champ d'entrée 30 une chaîne sélectionnée par l'utilisateur parmi les chaînes candidates dans la liste LC1 ou, à défaut, une chaîne sélectionnée automatiquement parmi les chaînes candidates C11-C14 en fonction de sa pertinence **(****figure 3D****).** Dans ce mode de réalisation, à défaut d'une sélection par l'utilisateur, le dispositif 2 sélectionne automatiquement la chaîne candidate la plus pertinente (e.g. dont la valeur de pertinence associée est la plus élevée).

Dans un mode de réalisation particulier, le dispositif 2 est en outre configuré pour remplacer le cas échéant dans le champ d'entrée 30 la chaîne la plus pertinente (qui avait été sélectionnée par défaut par le dispositif 2) par une autre chaîne sélectionnée ultérieurement dans la liste LC1 par l'utilisateur au moyen de l'unité d'interface 6.

La sélection et l'insertion E14 sont ici réalisées après détection de la fin de saisie (pen up) de l'objet graphique courant. On peut toutefois envisager de déclencher ces opérations avant même la détection de la fin de saisie dans le cas alternatif où le traitement de reconnaissance et la génération de chaînes candidates sont déclenchées avant la détection de fin de saisie de l'objet graphique courant (i.e. avant détection d'un pen up).

Dans cet exemple, le dispositif 2 insère automatiquement la chaîne de caractères « h » « e » « I » « I » « o » correspondant à l'objet graphique OG1 saisi sous forme d'écriture manuscrite par l'utilisateur.

Le dispositif 2 (i.e. l'unité d'enregistrement) est en outre configuré pour stocker (E16) les données graphiques DG1 en association avec :
- la liste LC1 de chaînes candidates C11-C14 ;
- la liste PN1 des valeurs de pertinences PN11-PN14 associées respectivement aux chaînes candidates C11-C14 ; et
- un identifiant ID1 de la chaîne CS1 sélectionnée et insérée dans le champ d'entrée 30.

L'identifiant ID1 peut prendre un format quelconque. Dans un cas particulier, l'identifiant d'une chaîne sélectionnée (ID1 dans ce cas) est la chaîne sélectionnée elle-même (SC1 dans ce cas). Alternativement, l'identifiant ID1 peut par exemple être un code déterminé identifiant la chaîne sélectionnée SC1. Cet identifiant peut par exemple identifier la position dans la liste LC1 de la chaîne sélectionnée (1^{ère}, 2^{ème}, 3^{ème} ou 4^{ème} position dans le cas présent). L'utilisation d'un identifiant dans le groupe de données permet de limiter le volume des données à stocker par l'unité d'enregistrement.

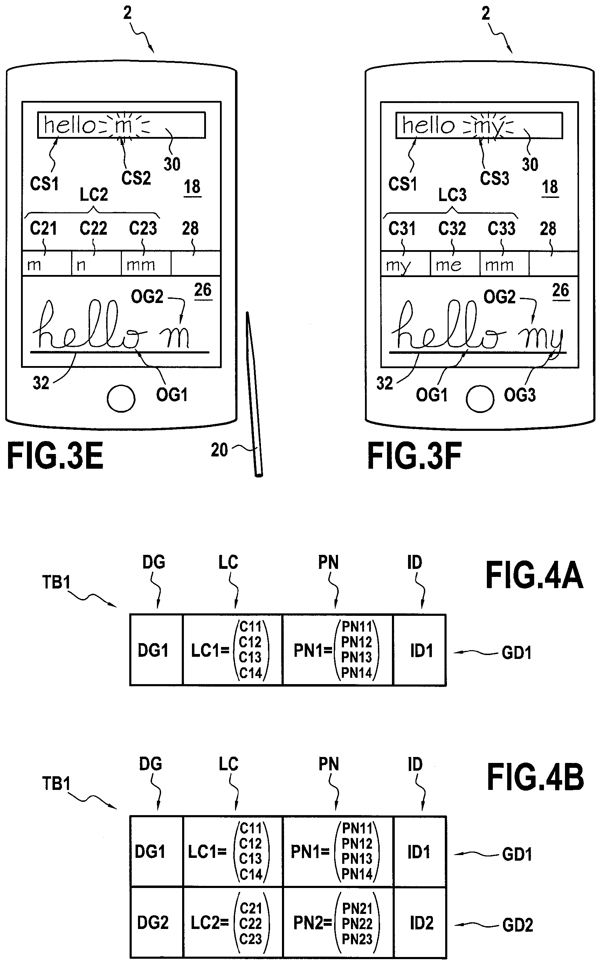

A noter que l'association des données [DG1 ; LC1 ; PN1 ; ID1] constitue un premier groupe de données GD1 (ou vecteur de données). Cette association GD1 de données est représentée sous la forme d'un tableau TB1 en **figure 4A****.**

Dans un mode de réalisation particulier, le dispositif 2 est configuré pour conserver (E16) en mémoire ce premier groupe de données GD1 pendant une première durée prédéterminée DP1. Cette première durée prédéterminée DP1 est par exemple fixée à l'avance par l'utilisateur ou le concepteur du dispositif. La durée DP1 peut le cas échéant être choisie de façon à ce qu'elle varie en fonction de certains paramètres tels quel le type de la langue utilisée par exemple ou de l'identité de l'utilisateur. La durée DP1 est choisie de préférence de sorte à limiter les ressources mémoires nécessaires pour mettre en oeuvre l'invention tout en gardant suffisamment longtemps le groupe de données en mémoire pour permettre son éventuelle utilisation ultérieure (e.g. consultation, édition).

Dans un cas particulier, la durée prédéterminée DP1 est choisie de façon à être infinie (i.e. stockage permanent dans le dispositif).

Le stockage E16 est dans cet exemple réalisé dans la mémoire M1. Ce stockage peut être réalisé dans un premier temps dans la mémoire 14 (dans la mémoire tampon BF par exemple) puis le groupe de données GD1 peut être transféré dans la mémoire M1.

Une fois le traitement de l'objet graphique courant OG1 achevé, le dispositif détermine (E18) si l'utilisateur débute la saisie d'un nouvel objet graphique. Pour ce faire, l'unité de détection détermine si un évènement « pen down » survient dans la zone de saisie 26. Dans l'affirmative, le dispositif 2 reprend le traitement à l'étape E4. Dans le cas contraire, le traitement prend fin.

Le stockage de GD1 permet de maintenir une connexion permanente entre les données composant le groupe de données GD1, à savoir : les données graphiques, les chaînes candidates, les valeurs de pertinences associées et la chaîne sélectionnée (ou du moins son identifiant). Le maintien de cette connexion (ou association), y compris pendant la saisie d'objets graphiques ultérieurs, permet de conserver de façon cohérente l'ensemble des données pertinentes de la saisie.

Grâce à cette connexion permanente, l'unité de reconnaissance peut, en réponse par exemple à une modification ultérieure des données graphiques GD1, modifier en conséquence la liste LC1 des chaînes candidates et la liste PN1 des valeurs de pertinence associées et l'unité d'insertion peut modifier en conséquence la chaîne CS1. Ainsi, en réponse à la modification des données graphiques GD1, le groupe de données GD1 stocké par l'unité d'enregistrement peut être mis à jour de manière appropriée. Comme expliqué en détail par la suite, cette connexion permanente permet d'éditer ce qui a été précédemment saisi par l'utilisateur.

La première durée prédéterminée DP1 est donc de préférence choisie de façon à ce que le groupe de données de l'objet graphique courant soit conservé en mémoire pendant (ou jusqu'à la fin de) la saisie d'un ou de plusieurs objets graphiques ultérieures (dans l'hypothèse où la saisie d'objets graphiques se poursuit).

Dans un exemple particulier, la première durée prédéterminée DP1 est choisie de façon à ce que le groupe de données de l'objet graphique courant soit conservé en mémoire au moins jusqu'à la saisie d'un objet graphique ultérieure ou, plus précisément, jusqu'à la fin de la saisie d'un objet graphique ultérieur.

Dans un exemple particulier, la première durée prédéterminée DP1 est choisie de façon à ce que le groupe de données de l'objet graphique courant soit conservé en mémoire au moins jusqu'à l'initiation du traitement par l'unité de traitement d'un objet graphique ultérieur.

Selon un mode de réalisation particulier, le premier groupe de données est conservé jusqu'à détection, par le module de traitement 4, d'un signal de fin de saisie d'objet graphique.

Il est ainsi possible de conserver en mémoire le groupe de données jusqu'à la fin de la saisie de tous les objets graphiques par l'utilisateur (e.g. jusqu'à validation définitive de la saisie par l'utilisateur ou jusqu'à ce que l'application du champ d'entrée 30 soit fermée).

Comme également expliqué ci-après, cette connexion permanente autorise la navigation intelligente dans le champ d'entrée et dans la zone de saisie afin de consulter (et éventuellement éditer) ce qui a été précédemment saisi par l'utilisateur.

L'unité d'insertion est configurée, en réponse à une commande prédéterminée, pour remplacer dans le champ d'entrée 30 la chaîne sélectionnée CS1 par une autre chaîne candidate choisie par l'utilisateur parmi ladite liste LC1 de chaînes candidates C11-C14 postérieurement à ladite insertion de la chaîne sélectionnée CS1 dans le champ d'entrée 30.

De façon avantageuse, la conservation en mémoire du premier groupe de donnée GD1 pendant la première durée prédéterminée DP1 permet ainsi la correction ultérieure de la chaîne sélectionnée CS1 dans le champ d'entrée 30. Si par exemple l'utilisateur réalise que la chaîne candidate qui a été initialement insérée dans le champ d'entrée 30 (automatiquement ou sur sélection de l'utilisateur) n'est pas appropriée, il peut corriger plus tard cette erreur dans le champ d'entrée 30 en y remplaçant la chaîne initialement sélectionnée CS1 par une autre chaîne candidate choisie par l'utilisateur (ou le système) parmi la liste LC1 conservée en mémoire dans le premier groupe de données DG1.

La description de cet exemple de réalisation se poursuivit en référence aux **figures 3E, 3F, 4B** **et** **4C****.** L'utilisateur entame à présent la saisie (i.e. l'écriture) d'un nouvel objet graphique OG2 correspondant à la lettre « m » **(****figure 3E****).** Le dispositif 2 détecte dans ce cas que l'objet graphique OG2 appartient à un nouveau mot distinct de l'objet graphique précédent OG1 (du fait par exemple de l'éloignement de OG2 vis-à-vis de OG1). Le traitement de l'objet graphique OG2 est réalisé en exécutant les étapes E2 à E18 de la même manière qu'expliqué ci-avant en référence à l'objet graphique OG1.

Une fois la lettre « m » formée dans la zone de saisie 26, le dispositif 2 détecte (E6) la levée du stylet opérée par l'utilisateur (détection d'un évènement « pen up »).

La liste LC2 de chaînes candidates C21 à C23 est donc générée (E8 et E10) à partir des données graphiques DG2 collectées pour l'objet graphique courant OG2. Le dispositif 2 affiche (E12) cette liste LC2 dans la zone d'affichage 28, et insère (E14) la chaîne CS2 dans le champ d'entrée 30 (dans cet exemple, la chaîne CS2 correspond à la chaîne candidate C21 sélectionnée par défaut par le dispositif 2). Une liste PN2 des valeurs de pertinence PN21-PN23 est par ailleurs générée (E10) en association avec les chaînes candidates respectives C21-C23.

Le dispositif 2 (i.e. l'unité d'enregistrement) stocke (E16) en outre, en tant que second groupe de données GD2, les données graphiques DG2 de l'objet graphique OG2 en association avec les listes LC2 et PN2 et avec un identifiant ID2 de la chaîne CS2 sélectionnée. La table TB1 en **figure 4B** représente les groupes de données GD1 et GD2 stockés par l'unité d'enregistrement dans la mémoire M1 dans cet exemple. Comme déjà expliqué, l'identifiant ID2 peut être la chaîne sélectionnée elle-même (C21 par exemple) ou un code identifiant la chaîne sélectionnée (e.g. sa position dans la liste LC2).

On suppose à présent que l'utilisateur entame la saisie de la lettre « y » constituant un troisième objet graphique OG3. Le dispositif 2 détecte l'occurrence d'un nouvel évènement « pen down » résultant de l'application d'un nouveau point de contact du stylet 20 sur la zone de saisie 26 de l'écran tactile 18.

Le dispositif détecte dans cet exemple que la lettre « y » doit être rattachée à l'objet graphique précédent OG2 (du fait par exemple de la proximité d'OG3 vis-à-vis d'OG2). Le traitement de l'objet graphique courant OG3 est à présent réalisé en exécutant les étapes E2 à E18 de manière analogue au traitement des objets graphiques précédents OG1 et OG2.

Le traitement d'OG3 diffère toutefois en ce que le dispositif 2 (i.e. l'unité d'enregistrement) est configuré pour enregistrer les données graphiques DG3 de l'objet graphique OG3 toute au long de sa saisie en association avec les données graphiques DG2 du second groupe de données GD2. Le groupe de données GD2 est ainsi modifié et renommé GD3 par souci de clarté **(****figure 4C****).**

Plus précisément, la liste LC2 de chaînes candidates est remplacée dans GD3 par une nouvelle liste LC3 de chaînes candidates C31-C33 générée par l'unité de reconnaissance. Les chaînes candidates C31-C33 sont générées à partir des données graphiques DG2 et DG3 de façon à être représentatives de l'ensemble graphique OG2+3 constitué par les objets graphiques OG2 et OG3 (ces deux objets graphiques formant ensemble le mot « my » dans cet exemple).

La liste LC3 est affichée dans la zone d'affichage 28 comme représenté en **figure 3F****.** Les valeurs de pertinence PN2 sont également remplacées dans GD3 par une nouvelle liste PN3 de valeurs de pertinences PN31-PN33 associées respectivement aux chaînes candidates C31-C33.

L'unité d'insertion est par ailleurs configurée pour remplacer la chaîne CS2 précédemment sélectionnée en relation avec OG2 par la chaîne CS3 sélectionnée en relation avec l'ensemble OG2+3. L'identifiant ID2 est donc remplacé dans le groupe de données GD3 par un identifiant ID3 de la chaîne sélectionnée CS3. Comme déjà expliqué, l'identifiant ID3 peut être la chaîne sélectionnée elle-même (C31 par exemple) ou un code identifiant la chaîne sélectionnée (e.g. sa position dans la liste LC3).

Au terme de cet exemple de saisie, les symboles « h » « e » « I » « I » « o « « m » « y » sont inclus dans le champ d'entrée 30.

Comme indiqué précédemment, un mode de réalisation alternatif est envisageable dans lequel les étapes E8 et E10 sont déclenchées sur détection d'un début (et non d'une fin) de la saisie de l'objet graphique courant (e.g. sur détection du point de contact PC1 au début de la saisie de l'objet graphique OG1). Dans cette variante de réalisation, l'unité de reconnaissance est par exemple configurée pour générer ladite liste de chaîne de symboles candidates sur détection d'un début de saisie de l'objet graphique courant. L'unité de reconnaissance peut par exemple être configurée pour débuter le traitement de reconnaissance sur détection du début de la saisie de l'objet graphique OG1 et pour générer ensuite la liste de chaînes candidates. Cette génération de liste peut alors se poursuivre jusqu'à ce que la fin de saisie de l'objet graphique OG1 soit détectée. Dans ce cas, la liste de chaînes candidates en cours de génération peut varier tout au long de la saisie de l'objet graphique courant. Le traitement de reconnaissance et la génération peuvent ainsi se poursuivre en continue entre la détection du début de saisie de l'objet graphique courant et la détection de fin de saisie de l'objet graphique courant.

Comme indiqué ci-avant, la sélection et l'insertion E14 peuvent également être réalisées avant la détection de la fin de saisie de l'objet graphique courant. Dans ce cas, la chaîne sélectionnée et insérée dans le champ d'entrée peut le cas échéant être modifiée au cours de la saisie de l'objet graphique courant.

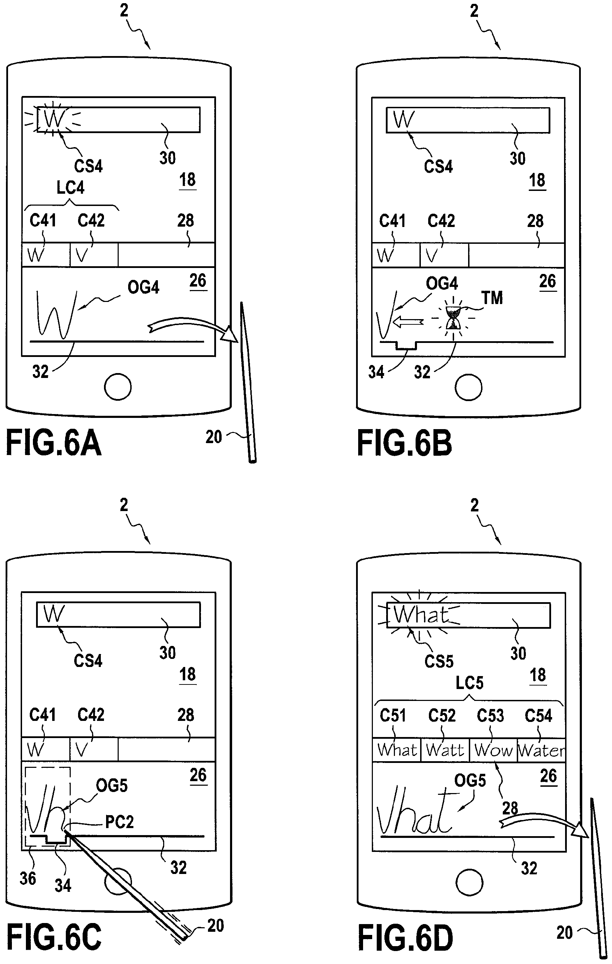

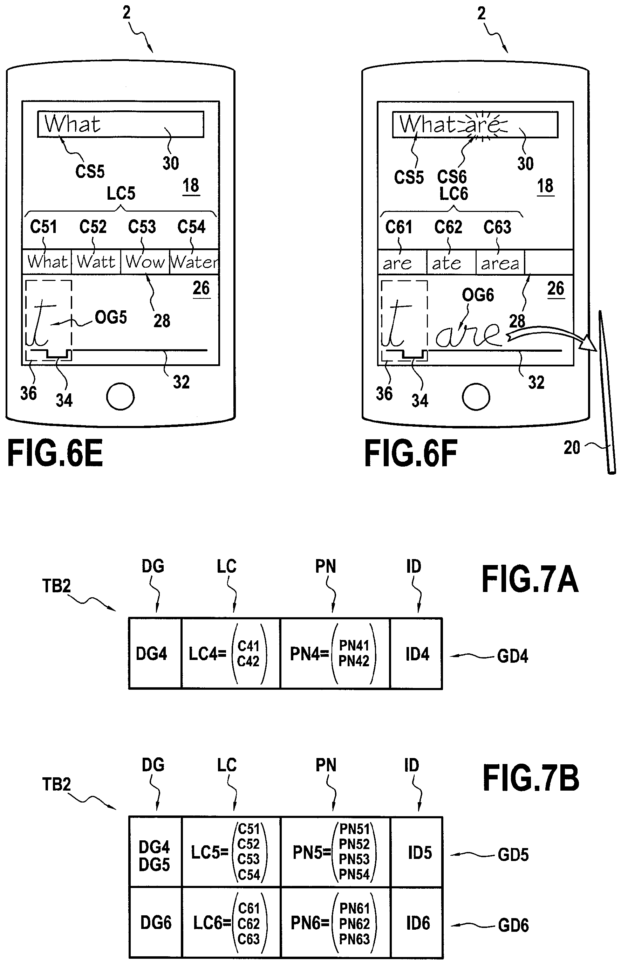

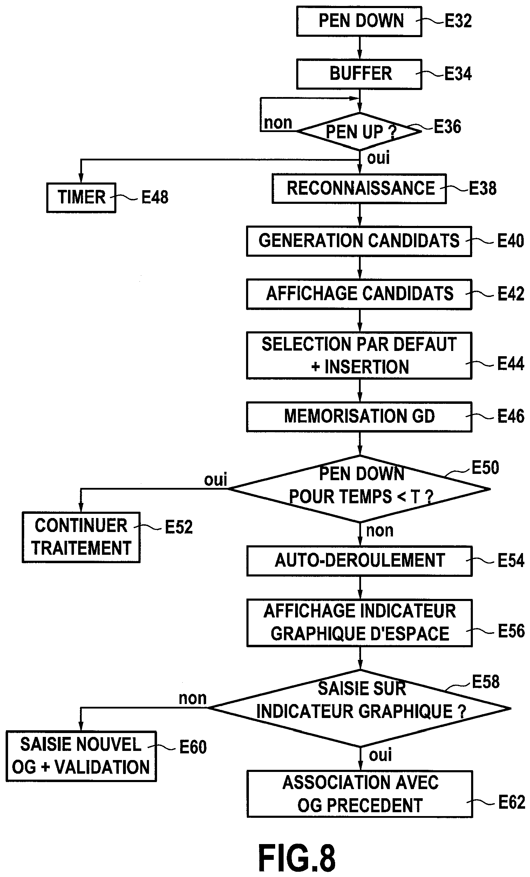

Un second mode de réalisation de l'invention est à présent décrit en référence aux figures **6A-6B**, 7A et 8.

A noter que, dans ce document, sauf indications contraires, les éléments communs à deux modes de réalisation distincts portent les mêmes numéros de références et présentent des caractéristiques identiques de sorte qu'ils ne sont pas à nouveau décrits par souci de simplicité.

Dans ce deuxième mode de réalisation, le dispositif 2 fonctionne de manière similaire au premier mode décrit en référence à la figure 5 mais diffère toutefois en ce que des fonctionnalités supplémentaires sont mises en oeuvre, à savoir la fonction de défilement automatique (ou auto-défilement) et éventuellement la fonction « space-switch » comme décrites ci-après.

On suppose à présent le cas où l'utilisateur débute la saisie d'un premier objet graphique courant OG4 (correspondant ici à la lettre « W ») dans la zone de saisie 26 **(****figure 6A****).**

Le dispositif 2 réalise le traitement de l'objet graphique courant OG4 en exécutant les étapes E32 à E46 de manière identique aux étapes E2 à E16 respectivement. En substance, sur détection du début de saisie de l'objet graphique OG4 (évènement « pen down »), l'unité d'enregistrement enregistre (E34) les données graphiques DG4 correspondantes. L'unité de reconnaissance génère (E40) une liste LC4 de chaînes candidates C41-C42. La chaîne CS4 sélectionnée par l'unité d'insertion est insérée (E44) dans le champ d'entrée 30. Dans cet exemple, la chaîne candidate C41 la plus pertinente (correspondant à la lettre « W ») est insérée par défaut dans le champ d'entrée 30. L'unité de reconnaissance génère également une liste PN4 de valeurs de pertinence PN4A-PN42 associées respectivement aux chaînes candidates C41-C42.

L'unité d'enregistrement stocke (E46) par ailleurs les données graphiques DG4 en association avec la liste LC4, la liste PN4 et un identifiant ID4 de la chaîne CS4 incluse dans le champ d'entrée 30 (cf. table TB2 en **figure 7A****),** ce groupe de données étant noté GD4 dans le cas présent. L'unité d'enregistrement est par exemple configurée pour conserver en mémoire ce groupe de données GD4 pendant la première durée prédéterminée DP1 telle que définie ci-avant. A noter toutefois que la fonction de défilement automatique décrite ci-après peut être mise en oeuvre sans qu'il soit nécessaire de conserver en mémoire tout le groupe de données DG4 pendant la durée prédéterminée DP1 comme décrit précédemment.

Le traitement de l'objet graphique OG4 diffère toutefois en ce que, sur détection de l'évènement « pen up » en E36, le dispositif 2 déclenche (E48) en outre le lancement d'un compteur de temps TM. L'exécution de ce compteur de temps permet la mise en oeuvre d'une fonction de défilement automatique des objets graphiques dans la zone de saisie 26.

Plus précisément, le dispositif 2 est dans cet exemple configuré pour détecter (E50) si un début de saisie d'un objet graphique ultérieur OG5 survient dans la zone de saisie 26 dans un temps prédéterminé T à compter de la détection de la fin de saisie d'OG4. Autrement dit, le dispositif 2 détermine si un évènement « pen down » survient dans la zone de saisie 26 dans un temps prédéterminé T à compter de la détection de la fin de saisie d'OG4.

Dans l'affirmative, le dispositif 2 continue (E52) le traitement de l'objet graphique ultérieur sans déclencher de défilement automatique dans la zone de saisie 26. Ce cas ne sera pas décrit plus en détail dans cet exemple.

Si, en revanche, le résultat de la détection à l'étape E50 est négatif (i.e. aucun « pen down » détecté dans le temps prédéterminé T), le dispositif 2 déclenche (E54) le défilement automatique des objets graphiques en cours d'affichage dans la zone de saisie 26, à savoir l'objet graphique OG4 dans le cas présent.

Ce défilement automatique se manifeste par le décalage dans la zone de saisie 26 de l'objet graphique courant (i.e. OG4) et de tous autres objets graphiques qui seraient éventuellement en cours d'affichage dans la zone de saisie 26, de façon à libérer dans la zone de saisie 26 de l'espace pour saisir un objet graphique ultérieur.

Dans le cas présent, ce décalage se traduit par le décalage de la lettre W vers la gauche de la zone de saisie de sorte que seule l'extrémité de la lettre est encore visible à l'écran **(****figure 6B****).** D'autres types de décalages (en termes notamment de direction ou d'amplitude) sont envisageables.

Dans un exemple particulier, l'affichage de la zone de saisie elle-même reste inchangé lors de la mise en oeuvre de la fonction de défilement automatique : ce sont les objets graphiques qui sont déplacés dans ladite zone de saisie afin de libérer de l'espace en vue de la saisie d'un objet graphique ultérieur. Dans un exemple particulier, au moins un objet graphique qui était en cours d'affichage dans la zone de saisie avant le défilement automatique est partiellement ou totalement retiré de la zone de saisie du fait du décalage opéré lors du défilement automatique.

La fonction d'auto-défilement est avantageuse en ce qu'elle permet de commander de manière intuitive le défilement des objets graphiques dans la zone de saisie sans que l'utilisateur n'ait besoin d'actionner un bouton ou interrupteur particulier. Le temps T peut être personnalisé à loisir afin d'adapter l'auto-défilement au style d'écriture de chaque utilisateur.

L'auto-défilement est réalisé sur la base du temps écoulé à compter de la dernière levée de stylet ce qui permet de rendre l'écriture plus fluide pour l'utilisateur. Cette fonction temporelle a un rôle de déclencheur dans la mesure où elle permet de déclencher le défilement dans la zone de saisie sans qu'aucune action supplémentaire ne soit requise de la part de l'utilisateur (ce qui gênerait l'expérience de ce dernier).

Dans une première variante, le temps prédéterminé T est fonction de la position de l'objet graphique courant (i.e. OG4 dans le cas présent) dans la zone de saisie 26 (le temps T est par exemple fonction de la position d'OG4 suivant l'axe principal de la saisie dans la zone de saisie, à savoir l'axe horizontal dans le cas présent). On peut par exemple envisager que le temps T diminue lorsque l'objet graphique courant est proche de la fin (située ici à droite) de la zone de saisie 26.

La fonction d'auto-défilement peut en outre être déclenchée uniquement lorsque l'objet graphique courant se trouve dans une portion prédéterminée (e.g. suivant l'axe principal de la saisie) de la zone de saisie 26 (dans la deuxième moitié côté droit par exemple).

Dans une deuxième variante, le temps prédéterminée T est fonction de la longueur cumulée du tracé du ou des objets graphiques en cours d'affichage suivant l'axe principal de la saisie (i.e. l'axe horizontal dans le cas présent) dans la zone de saisie. Si par exemple la longueur cumulée du tracé suivant l'axe principal de la saisie excède une valeur seuil, le temps prédéterminé T est plus faible.

Les première et deuxième variantes ci-dessus peuvent être combinées à loisir selon le cas. Ces variantes permettent d'augmenter encore davantage l'ergonomie de la saisie pour l'utilisateur.

L'exécution du procédé de saisie peut ainsi se poursuivre de la même manière pour chaque objet graphique ultérieur.

La description de cet exemple de mise en oeuvre est poursuivie ci-après en référence aux **figures 6B-6F** **et** **7B**. Dans la suite de cet exemple, le dispositif 2 met en outre en oeuvre une fonctionnalité facultative dite « space-switch » visant à insérer un indicateur d'espace à la suite du dernier objet graphique lorsque l'auto-défilement a été effectué. On comprendra toutefois que la fonction d'auto-défilement peut être mise en oeuvre sans cette fonctionnalité additionnelle dite « space-switch ».

Dans cet exemple, une fois l'objet graphique OG4 décalé dans la zone de saisie 26, le dispositif 2 affiche (E56) dans la zone de saisie 26 un indicateur graphique 34 définissant une région 36 de la zone de saisie 26 adjacente à l'objet graphique courant (i.e. OG4 dans le cas présent) **(****figures 6B et 6C****).** Dans le cas envisagé ici, l'indicateur graphique 34 se traduit par une déformation locale de la ligne d'écriture 32. Cette déformation 34 (ici en forme de renfoncement) indique à l'utilisateur une région 36 adjacente de l'objet graphique OG4 dans laquelle il est susceptible de saisir un nouvel objet graphique OG5.

On comprendra qu'il ne s'agit ici que d'un exemple de mise en oeuvre, l'indicateur graphique 32 pouvant prendre d'autres formes selon les besoins.

Au cours d'une étape E58, le dispositif (i.e. l'unité de détection) détecte ensuite si l'utilisateur saisit un objet graphique ultérieur OG5 sur l'indicateur graphique 34 ou, plus précisément, dans la région 36 de la zone de saisie 26. Pour ce faire, l'unité de détection détermine la position du point de contact PC2 appliqué par l'utilisateur à l'aide de son stylet 20 dans la zone 26 de l'écran tactile 18. A partir de cette position, l'unité de détection détecte si PC2 se trouve ou non dans la région 36.

Dans la négative, le dispositif 2 en déduit que le nouvel objet graphique courant OG5 est indépendant de l'objet graphique précédent OG4. Aussi, il traite (E60) l'objet graphique OG5 indépendamment de l'objet graphique OG4 (de la même manière qu'OG2 vis-à-vis d'OG1 comme décrit ci-avant). Dans ce cas, l'unité d'enregistrement est configurée pour enregistrer (E60) les données graphiques DG5 de l'objet graphique ultérieur OG5 tout au long de sa saisie dans un groupe de données indépendant des données graphique DG4.

En revanche, si le dispositif 2 détecte que la saisie de l'objet graphique OG5 intervient dans la région 36, il en déduit que ce nouvel objet graphique courant OG5 appartient au même mot (ou ensemble graphique) que l'objet graphique précédent OG4. Aussi, il traite (E62) l'objet graphique OG5 de façon à l'associer à l'objet graphique OG4 (de la même manière que l'association d'OG3 vis-à-vis d'OG2 telle que décrit ci-avant). Autrement dit, si l'unité de détection détecte un début de saisie d'un objet graphique ultérieur OG5 dans la région 36, l'unité d'enregistrement est configurée pour enregistrer (E62) les données graphiques DG5 de l'objet graphique ultérieur OG5 toute au long de sa saisie en association avec les données graphiques DG4 dans le groupe de données GD4 (renommé GD5 par souci de clarté ; **figure 7B****).**

Dans l'exemple représenté en **figures 6C et 6D****,** l'utilisateur écrit d'une traite (sans levée de stylet) le fragment de mot « hat » juste derrière la lettre « W » afin de former le mot « What ». Par souci de simplicité, on supposera ici qu'aucune levée de stylet intermédiaire n'est nécessaire pour écrire l'objet graphique OG5 « hat » bien qu'en pratique, au moins une levée est généralement souhaitable pour former la barre supérieure de la lettre « t ».

Dans un autre exemple, l'objet graphique OG5 pourrait correspondre à une partie complémentaire de l'objet graphique précédent afin de former une même lettre ou un même symbole (e.g. OG5 pourrait correspondre au point d'un « i » dont la base serait formée par OG4).

Dans l'exemple considéré ici, le dispositif 2 détecte (E62) ensuite la levée de stylet résultant de la fin de saisie de l'objet graphique OG5. Le traitement d'OG5 se poursuit de façon à associer OG5 à l'objet graphique OG4. Le dispositif 2 génère notamment une liste LC5 de chaînes candidates C51-C54 à partir des données graphiques DG4 et DG5. Une liste PN5 des valeurs de pertinence PN51-PN54 associées respectivement aux chaînes candidates C51-C54 est également générée par l'unité de reconnaissance. L'unité d'insertion sélectionne une chaîne CS5 comme déjà décrit précédemment et insère cette chaîne de symboles dans le champ d'entrée 30.

De plus, l'unité d'enregistrement stocke, dans un même groupe de données GD5 qui remplace le groupe de données GD4, les données graphiques GD4 et GD5 en association avec les listes LC5 et PN5 ainsi qu'un identifiant de la chaîne CS5 sélectionnée (table TB2, **figure 7B****).**

Toujours dans cet exemple de réalisation, on considère à présent le cas où le dispositif 2 procède à l'auto-défilement des objets graphiques OG4 et OG5 dans la zone de saisie 26 **(****figure 6E****)** et fait apparaître l'indicateur graphique 34 comme déjà expliqué en référence à la figure 6B.

Dans ce cas, l'utilisateur écrit d'une traite l'objet graphique OG6 formant le mot « are » dans la zone de saisie 26. L'objet graphique OG6 est cette fois saisi hors de la région 36 de sorte que le dispositif 2 poursuit le traitement d'OG6 en tant que nouvel objet graphique indépendant de l'objet graphique précédent. En particulier, le dispositif 2 génère la liste LC6 de chaînes candidates C61-C63 à partir des données graphiques DG6 de l'objet graphique OG6 et affiche cette liste dans la zone d'affichage 28. La chaîne CS6 est sélectionnée parmi les chaînes candidates C61-C63 et insérée dans le champ d'entrée 30. Une liste PN6 des valeurs de pertinence PN61-PN63 associées respectivement aux chaînes candidates C61-C63 est également générée par l'unité de reconnaissance.

De plus, l'unité d'enregistrement stocke les données graphiques DG6 en association avec les listes LC6 et PN6 ainsi qu'un identifiant ID6 de la chaîne sélectionnée CS6 afin de former un nouveau groupe de données GD6 (table 2, **figure 7B****).**

Dans une mise en oeuvre particulière de l'invention, lorsque le dispositif 2 (i.e. son unité de détection) détecte que l'objet graphique ultérieur (OG6) est situé à l'extérieur de la région 36, l'unité d'insertion valide définitivement la chaîne CS6 insérée par défaut dans le champ d'entrée 30. Il n'est alors plus possible pour l'utilisateur de sélectionner directement une autre chaîne candidate dans la zone 28 en vue de l'insérer dans le champ d'entrée 30 (une procédure peut toutefois être envisagée pour permettre à l'utilisateur de corriger cette sélection ultérieurement). Autrement dit, la chaîne CS6 incluse dans le champ d'entrée 30 n'est plus « active » une fois la validation effectuée.

Dans une mise en oeuvre particulière, le module de traitement 4 est configuré, après une deuxième durée prédéterminée DP2 à compter de ladite validation, pour que l'objet graphique courant soit affiché en caractères d'imprimerie (opération dite de « fontification » en anglais), les moyens d'enregistrement conservant en mémoire le groupe de données associé pendant la première durée prédéterminée DP1 définie ci-avant. Les caractères d'imprimerie peuvent être des caractères UNICODE par exemple. Pour ce faire, le module de traitement réalise par exemple une fonction de mesure de temps (« timer ») qui est déclenchée à compter de ladite validation. La durée prédéterminée DP2 peut notamment être adaptée en fonction des besoins de l'utilisateur.

Dans une variante, le module de traitement 4 est configuré pour déclencher l'opération dite de « fontification » après la durée prédéterminée DP2 à compter cette fois d'un évènement « pen up » survenant pendant la saisie d'un objet graphique.

On comprend du deuxième mode de réalisation ci-dessus et de ses variantes que les fonctionnalités d'auto-défilement ou encore « space-switch » permettent d'améliorer l'ergonomie de la saisie par l'utilisateur en incluant dans le processus naturel d'écriture des déclencheurs permettant de contrôler intuitivement la gestion de la saisie. Ces fonctionnalités permettent d'éviter à l'utilisateur d'actionner des interrupteurs respectifs pendant la saisie (en appuyant sur un bouton pour décaler le texte par exemple), ce qui réduirait fortement la fluidité de l'écriture.

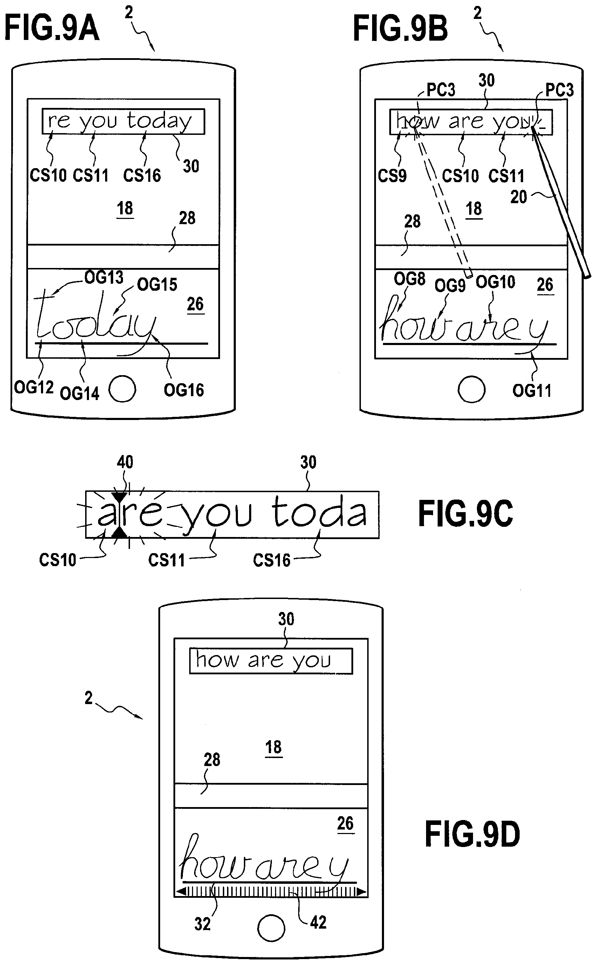

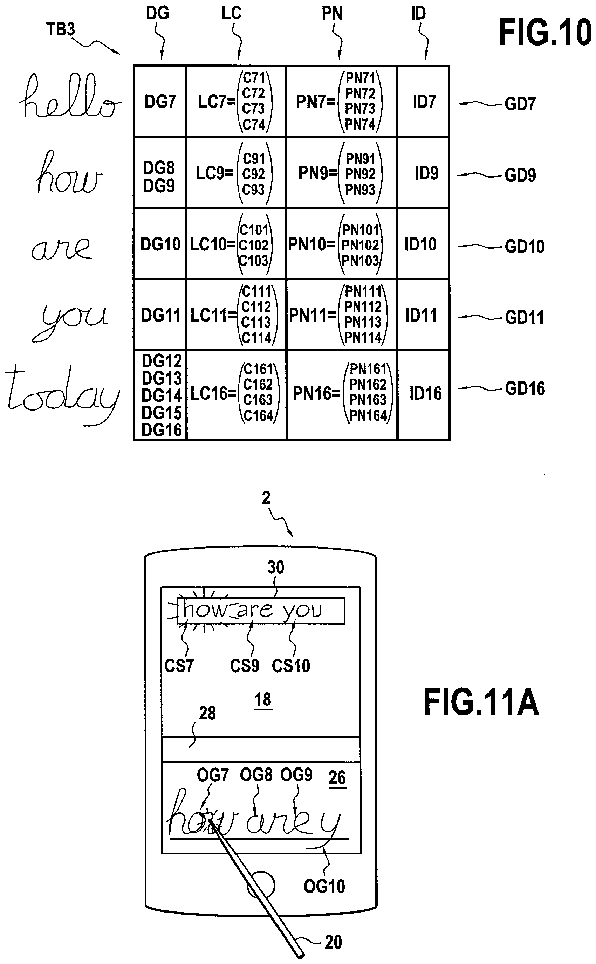

Un troisième mode de réalisation est à présent décrit en référence aux **figures 9A, 9B****,** **10** **et** **11A à 11D.** On considère ici un cas où l'utilisateur a saisi la phrase « hello how are you » dans la zone de saisie 26. La saisie de ces quatre mots se découpe en objets graphiques OG7-OG16 dont les données graphiques respectives DG7-DG16 sont stockées dans des groupes de données respectifs GD7, GD9, GD10, GD11 et GD16, comme représenté en **figure 10** (tableau TB3). Ces groupes de données comprennent chacun une liste respective LC7-LC16 de chaînes candidates, une liste respective PN7-PN16 de valeurs de pertinence associées ainsi qu'un identifiant respectif ID7-ID16 de la chaîne insérée dans le champ d'entrée 30.

Le contenu des groupes de données GD7 à GD15 apparaît clairement au vu du tableau TB3 de la **figure 10** et ne sera donc pas décrit davantage ici.

Dans ce troisième mode de réalisation, une fonction dite « de navigation » est mise en oeuvre par le dispositif 2, et plus précisément par le module de traitement 4. On considère le cas où seul les chaînes CS10 et CS15 ainsi qu'une partie de la chaîne CS9 sont en cours d'affichage (i.e. visibles) dans le champ d'entrée 30 **(****figure 9A****).** Seuls les objets graphiques OG12 à OG16 associés à la chaîne CS16 sont affichés dans la zone de saisie 26.

Le module de traitement 4 est configuré, en réponse à une première interaction prédéterminée de l'utilisateur avec le dispositif de saisie (avec par exemple les moyens d'interface, comme par exemple l'écran tactile 18), pour afficher dans le champ d'entrée 30 au moins l'une quelconque des chaînes de symboles précédemment insérées qui n'était plus en cours d'affichage dans le champ d'entrée au moment de ladite commande.

Dans l'exemple de la **figure 9B****,** l'utilisateur commande par exemple l'affichage des objets graphiques CS9 (« how ») et CS10 (« are ») dans le champ d'entrée 30. Cette commande d'affichage prend par exemple la forme d'une première interaction prédéterminée de l'utilisateur avec le dispositif de saisie. Le module de traitement 4 est par exemple configuré pour que la première interaction prédéterminée soit réalisée par l'utilisateur en appliquant un point de contact PC3 sur l'écran tactile 18 au niveau du champ d'entrée 30 et en déplaçant ledit point de contact PC3 afin de déclencher un défilement desdites chaînes dans le champ d'entrée 30 jusqu'à l'affichage de la chaîne souhaitée.

Dans l'exemple de la **figure 9B****,** l'utilisateur fait donc glisser la pointe de son stylet 20 de gauche à droite sur l'écran tactile 18 au niveau du champ d'entrée 30. Sur détection du point de contact glissant PC3 dans le champ d'entrée 30, le dispositif 2 (i.e. son module de traitement 4) déclenche le défilement des chaînes de symboles incluses dans le champ d'entrée 30 de façon à faire apparaître les chaînes CS9, CS10 et SC11 dans le cas présent.

Le dispositif 2 (i.e. son module de traitement 4) est de préférence configuré pour afficher dans la zone de saisie 30 au moins un objet graphique correspondant à l'une des chaînes dont l'utilisateur a commandé l'affichage dans le champ d'entrée 30. Dans le cas présent, le dispositif 2 fait défiler les objets graphiques de façon à afficher dans la zone de saisie 26 les objets graphiques OG8 et OG9 tous deux associés à la chaînes CS9 ainsi que l'objet graphique OG10 associé à la chaîne SC10. De plus, une portion seulement de l'objet graphique OG11 associé à la chaîne CS11 est affichée en raison ici de la taille limitée de la zone de saisie 26.

L'utilisateur peut ainsi naviguer dans le champ d'entrée 30 afin de consulter les différentes chaînes de symboles précédemment insérées dans le champ d'entrée 30.

Dans un cas particulier, le module de traitement 4 est configuré pour contrôler l'affichage en temps réel dans la zone de saisie 26 d'objets graphiques en correspondance avec le défilement imprimé dans le champ d'entrée 30 par le déplacement du point de contact. Ainsi, l'utilisateur peut en permanence consulter les objets graphiques correspondant aux chaînes de symboles en cours d'affichage dans le champ d'entrée 30.

Dans une variante, le module de traitement 4 est configuré pour que la première interaction prédéterminée soit réalisée par l'utilisateur en appliquant un point de contact sur l'écran tactile au niveau d'une barre de défilement 42 affichée sur l'écran tactile (par exemple sous la ligne d'écriture 32) à cet effet et en déplaçant ledit point de contact le long de ladite barre de défilement afin de déclencher un défilement en temps réel des chaînes dans le champ d'entrée jusqu'à l'affichage de la chaîne souhaitée **(****figure 9D****).** Cette barre de défilement 42 peut prendre par exemple la forme d'une crémaillère ou d'une zone quelconque de l'écran tactile 18 le long de laquelle l'utilisateur peut déplacer son doigt ou un stylet pour naviguer dans le champ d'entrée 30.

Dans un mode de réalisation particulier, le module de traitement 4 est configuré, en réponse une deuxième interaction prédéterminée de l'utilisateur avec le dispositif de saisie, pour afficher dans la zone de saisie 26 au moins l'un quelconque des objets graphiques précédemment saisis qui n'était plus en cours d'affichage dans la zone de saisie 26 au moment au moment de ladite deuxième interaction.

Le module de traitement 4 est de préférence configuré pour afficher en outre dans le champ d'entrée 30 au moins une portion d'une chaîne sélectionnée correspondant à l'un des objets graphiques dont l'affichage dans la zone de saisie a été commandé par ladite deuxième interaction prédéterminée.

Le module de traitement 4 est par exemple configuré pour que la deuxième interaction prédéterminée soit réalisée par l'utilisateur en appliquant un point de contact sur l'écran tactile 18 au niveau de la zone de saisie 26 et en déplaçant ledit point de contact afin de déclencher un défilement en temps réel desdits objets graphiques dans la zone de saisie 26 jusqu'à l'affichage de l'objet graphique souhaité.

L'utilisateur peut par exemple glisser la pointe de son stylet 20 de gauche à droite sur l'écran tactile 18 au niveau de la zone de saisie 26. Sur détection du point de contact glissant dans la zone appropriée, le dispositif 2 (i.e. son module de traitement 4) déclenche le défilement des objets graphiques inclus dans la zone de saisie 26 de façon à y faire apparaître les différents objets graphiques précédemment saisis.

Le module de traitement 4 est de préférence configuré pour contrôler l'affichage en temps réel dans le champ d'entrée 30 de chaînes sélectionnées en correspondance avec le défilement imprimé par le déplacement du point de contact.

Toutes les variantes de contrôle de défilement décrites ci-dessus peuvent être combinées d'une manière quelconque afin d'adapter le contrôle de défilement dans le champ d'entrée et/ou dans la zone de saisie selon les besoins de l'utilisateur.

De façon préférée, lorsqu'un défilement des objets graphiques est déclenché dans la zone de saisie, un défilement correspondant est réalisé en temps réel dans le champ d'entrée, et inversement, lorsqu'un défilement des chaînes de symboles est déclenché dans le champ d'entrée, un défilement correspondant est réalisé en temps réel dans la zone de saisie. De cette manière, l'utilisateur peut naviguer dans le champ d'entrée et dans la zone de saisie et visualiser en permanence les objets graphiques et les chaînes de symboles appropriées correspondants.

Dans une mise en oeuvre particulière, le dispositif 2 (i.e. son module de traitement 4) est configuré pour afficher, lors d'un défilement des chaînes de symboles dans le champ d'entrée 30, un marqueur pour repérer une chaîne dite chaîne active pouvant être éditée par l'utilisateur.

La **figure 9C** représente un exemple de marqueur (noté ici 40) qui marque le mot « are » (correspondant à la chaîne CS9) comme actif, indiquant ainsi à l'utilisateur que ce mot peut être édité si besoin.

Diverses fonctions d'édition peuvent être mises en oeuvre par le dispositif de saisie 2. Le module de traitement 4 est configuré pour permettre à l'utilisateur d'éditer au moyen de l'unité d'interface une chaîne en cours d'affichage dans le champ d'entrée 30, le groupe de données de ladite chaîne éditée étant modifié en réponse à cette édition par le module de traitement 4 et stocké par les moyens d'enregistrement. La mise à jour du groupe de données de la chaîne éditée est possible grâce à la connexion permanente assurée entre les différentes données par le dispositif 2 tout long de la saisie.

Selon une mise en oeuvre particulière, le module de traitement 4 est configuré, lorsque l'utilisateur saisit un nouvel objet graphique en superposition d'un objet graphique précédemment saisi qui est en cours d'affichage dans la zone de saisie 30, pour mettre à jour le groupe de données stocké de l'objet graphique précédemment saisi avec : les données graphiques du nouvel objet graphique, la liste de chaînes candidates et les valeurs de pertinences associées générées par l'unité de reconnaissance pour le nouvel objet graphique, et la chaîne sélectionnée par l'unité d'insertion pour le nouvel objet graphique.

En pratique, l'utilisateur peut ainsi écrire sur un objet graphique affiché dans la zone de saisie 26, ce qui déclenche le traitement du nouvel objet graphique et la modification en conséquence du groupe de données correspondant à l'objet graphique ainsi édité.

Pour éditer un objet graphique, le module de traitement 4 peut être configuré pour permettre à l'utilisateur de sélectionner au moyen de l'écran tactile 18 un objet graphique à éditer. Cette sélection peut être réalisée de différente manière. Dans un exemple particulier, cette sélection est réalisée par l'application d'un point de contact sur l'écran tactile 18 au niveau de l'objet graphique à éditer (i.e. dans la zone de saisie 26), la sélection déclenchant alors la sélection en tant que chaîne active de la chaîne correspondante insérée dans le champ d'entrée.

En **figure 11A****,** par exemple, l'utilisateur sélectionne l'objet graphique OG7 (i.e. le mot « how ») dans la zone de saisie 26 en tapant sur l'écran tactile 18 à l'aide de son stylet au niveau de l'objet OG7. Cette sélection entraîne la sélection en tant que chaîne active de la chaîne CS7 présente dans le champ d'entrée 30.

Dans une mise en oeuvre particulière, le module de traitement 4 est configuré, en réponse à une troisième interaction prédéterminée de l'utilisateur avec le dispositif de saisie, pour insérer de l'espace entre deux objets graphiques en cours d'affichage dans la zone de saisie 26. On peut envisager de réaliser cette fonction de différentes manières.

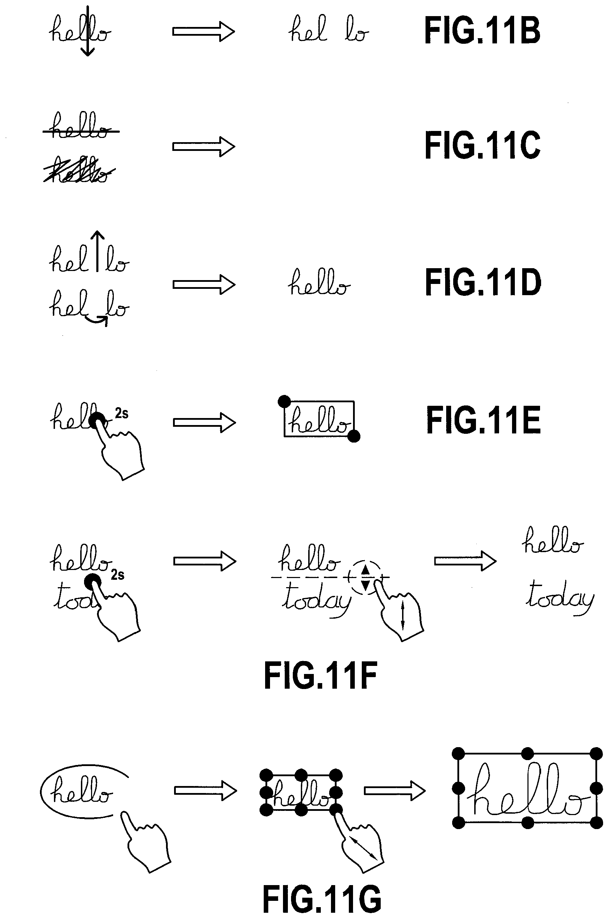

Dans une mode de réalisation particulier, la troisième interaction prédéterminée consiste à appliquer un point de contact sur l'écran tactile et à faire glisser celui-ci vers le bas de l'écran tactile 18 de façon à faire le geste d'une ligne verticale de haut en bas entre les symboles où l'on souhaite insérer de l'espace (comme par exemple représenté en **figure 11B****).** Un premier geste de haut en bas permet d'ouvrir un espace entre deux symboles. Le cas échéant, un deuxième geste de haut en bas entre ces mêmes symboles permet d'augmenter l'espace précédemment introduit par le premier geste.

Selon des variantes particulières, les **figures 11C, 11D et 11E**, **11F et 11G** représentent d'autres tracés que l'utilisateur peut effectuer sur l'écran tactile 18 (au niveau de la zone de saisie 26 par exemple) afin d'éditer ce qu'il a précédemment saisi. Il peut par exemple supprimer un ou plusieurs objets graphiques en faisant glisser un point de contact de la droite vers la gauche sur le ou les objets graphiques à supprimer **(****figure 11C****).**

L'utilisateur peut encore supprimer de l'espace entre deux objets graphiques qui sont espacés l'un de l'autre en réalisant un geste vertical cette fois de bas en haut entre les deux objets graphiques en question **(****figure 11D****).** Comme représenté en figure 11D, des gestes alternatifs peuvent être envisagés pour réaliser la suppression (ou diminution) d'un espace. Chaque occurrence d'un tel geste permet de réduire l'espace entre les deux objets graphiques jusqu'à suppression totale de cet espace le cas échéant.

L'utilisateur peut également appliquer un point de contact pendant un temps prédéterminé (e.g. 2 secondes) sur un objet graphique afin de déclencher la sélection de cet objet **(****figure 11E****),** cette sélection permettant ensuite d'éditer cet objet spécifiquement.

La **figure 11F** représente une fonction d'édition en deux étapes. Dans un premier temps, l'utilisateur applique un point de contact entre deux objets graphiques situés l'un au-dessus de l'autre dans la zone de saisie. Sur détection d'un tel point de contact pendant un temps prédéterminé, une ligne en pointillée apparaît entre les deux objets. Dans un deuxième temps, l'utilisateur peut utiliser cette ligne en pointillée ou un curseur prévu à cet effet afin d'insérer de l'espace selon la direction verticale entre les deux objets graphiques concernés.

La **figure 11G** représente une fonction d'édition permettant à l'utilisateur de modifier facilement la taille d'un objet graphique. Pour ce faire, l'utilisateur applique un point de contact au voisinage de l'objet et réalise un tracé englobant au moins sensiblement l'objet afin de le sélectionner en vue de son édition ultérieure. La sélection de celui-ci fait apparaître un encadrement autour de l'objet qui permet ensuite, par déplacement de l'un de ses points sur l'écran tactile par l'utilisateur, de modifier la taille de l'objet graphique sélectionné.

En résumé, la présente invention permet la saisie d'objets graphiques sur un dispositif de saisie et la conversion de ces objets graphiques en chaînes de symboles correspondantes qui sont insérées dans un champ d'entrée d'une application en cours d'exécution sur le dispositif de saisie. Le dispositif peut regrouper certains objets graphiques si nécessaire et stocker les données graphiques d'un (ou plusieurs) objet graphique en association avec les chaînes candidates, les valeurs de pertinence et l'identifiant de la chaîne insérée dans le champ d'entrée. Ce stockage est par exemple maintenu au moins pendant une durée prédéterminée et, de préférence, jusqu'à la fin de la saisie de tous les objets graphiques par l'utilisateur (e.g. jusqu'à validation définitive du message par l'utilisateur ou jusqu'à ce que l'application du champ d'entrée 30 soit fermée).

La présente invention peut par exemple mettre en oeuvre des fonctions notamment de navigation et/ou d'édition comme décrites ci-avant.

Différentes fonctionnalités (auto-défilement, « space-switch »...) faisant intervenir des déclenchements automatisés intégrés dans le processus naturel d'écriture permettent d'améliorer de manière significative l'ergonomie de la saisie du point de vue utilisateur.

Cette invention trouve une application toute particulière dans la saisie de texte ou de caractères de types alphanumériques (ou plus généralement de caractères conformes au standard Unicode).

Un homme du métier comprendra que les modes de réalisation et variantes décrits ci-avant ne constituent que des exemples non limitatifs de mise en oeuvre de l'invention. En particulier, l'homme du métier pourra envisager une quelconque combinaison des variantes et modes de réalisation décrits ci-avant afin de répondre à un besoin bien particulier.

## Revendications

1. Dispositif de saisie (2) apte à être utilisé par un utilisateur pour entrer des symboles dans un champ d'entrée (30) d'une application pouvant être exécutée sur ledit dispositif, le dispositif comprenant :
- une unité d'interface comprenant un écran tactile (18), ladite unité d'interface permettant la saisie manuelle et l'affichage, dans une zone de saisie (26) dudit écran, d'objets graphiques (OG1-OG16) ; et
- un module de traitement (4) d'objets graphiques, ledit module de traitement comprenant, pour le traitement de chaque objet graphique courant :
• une unité de détection d'un début de saisie et d'une fin de saisie dudit objet graphique courant (OG1) dans ladite zone de saisie (26) ;
• une unité d'enregistrement apte, sur détection d'un début de saisie dudit objet graphique courant, à enregistrer des données graphiques (DG1) correspondant audit objet graphique courant (OG1) tout au long de sa saisie ;
• une unité de reconnaissance configurée pour générer des chaînes candidates (C11-C14) d'au moins un symbole à partir desdites données graphiques, chacune desdites chaînes candidates étant associée à une valeur de pertinence (PN11-PN14) représentative de la pertinence de ladite chaîne candidate vis-à-vis desdites données graphiques ; et
• une unité d'insertion configurée pour insérer dans ledit champ d'entrée (30) une chaîne sélectionnée (CS1) par l'utilisateur dans ladite liste (LC1) ou, à défaut, une chaîne sélectionnée parmi lesdites chaînes candidates en fonction de sa pertinence ;
dans lequel les moyens d'enregistrement sont configurés pour stocker, en association avec lesdites données graphiques (DG1), lesdites chaînes candidates (C11-C14) et leur valeur de pertinence associée (PN11-PN14), ainsi qu'un identifiant de ladite chaîne sélectionnée (ID1), ladite association formant un premier groupe de données (GD1), et pour conserver en mémoire ledit premier groupe de données pendant une première durée prédéterminée ;
dans lequel le module de traitement est configuré pour permettre à l'utilisateur d'éditer au moyen de l'unité d'interface une chaîne en cours d'affichage dans le champ d'entrée (30), le groupe de données de ladite chaîne éditée étant mis à jour en réponse à cette édition par le module de traitement et stocké par les moyens d'enregistrement,
dans lequel l'unité d'insertion est configurée, en réponse à une commande prédéterminée, postérieurement à ladite insertion de la chaîne sélectionnée dans ledit champ d'entrée, pour remplacer dans le champ d'entrée ladite chaîne sélectionnée par une autre chaîne candidate choisie par l'utilisateur parmi ladite liste de chaînes candidates conservée en mémoire dans le premier groupe de données.

2. Dispositif selon la revendication 1, l'unité d'interface étant configurée, lorsque la fin de saisie de l'objet graphique courant a été détectée et si aucun début de saisie d'un objet graphique ultérieur n'a été détecté dans un temps prédéterminé à compter de ladite détection de fin saisie, pour décaler l'affichage de l'objet graphique courant (OG4) dans la zone de saisie de façon à libérer dans ladite zone de saisie (26) de l'espace pour saisir un objet graphique ultérieur (OG5).

3. Dispositif selon la revendication 2, dans lequel le temps prédéterminé est fonction de la position de l'objet graphique courant (OG4) dans la zone de saisie.

4. Dispositif selon la revendication 2 ou 3, dans lequel le temps prédéterminé est fonction de la longueur cumulée du tracé suivant l'axe principal de saisie du ou des objets graphiques en cours d'affichage dans la zone de saisie (26).

5. Dispositif selon l'une quelconque des revendications 2 à 4, dans lequel l'unité d'interface est configurée, une fois ledit décalage effectué, pour afficher dans la zone de saisie (26) un indicateur graphique (34) définissant une région (36) de la zone de saisie (26) adjacente à l'objet graphique courant (OG4),
et dans lequel, si l'unité de détection détecte un début de saisie d'un objet graphique ultérieur dans ladite région, l'unité d'enregistrement est configurée pour enregistrer les données graphiques (DG5) de l'objet graphique (OG5) ultérieur toute au long de sa saisie en association avec les données graphiques (OG4) du premier groupe de données (DG4).

6. Dispositif selon l'une quelconque des revendications 2 à 5, dans lequel l'unité d'interface est configurée, une fois ledit décalage effectué, pour afficher dans la zone de saisie (26) un indicateur graphique (34) définissant une région (36) de la zone de saisie adjacente à l'objet graphique courant (OG5),
et dans lequel, si l'unité de détection détecte un début de saisie d'un objet graphique ultérieur hors de ladite région (36), l'unité d'enregistrement est configurée pour enregistrer les données graphiques (DG6) de l'objet graphique (OG6) ultérieur tout au long de sa saisie dans un second groupe de données (GD6) indépendant dudit premier groupe de données (GD5).

7. Dispositif selon la revendication 5 ou 6, dans lequel, si l'unité d'interface détecte le début de saisie de l'objet graphique ultérieur hors de ladite région (36) de la zone de saisie (26), l'unité d'insertion valide ladite chaîne sélectionnée.

8. Dispositif selon la revendication 7, dans lequel le module de traitement est configuré, après une deuxième durée prédéterminée à compter de ladite validation, pour que l'objet graphique courant (OG1-OG16) soit affiché en caractères d'imprimerie, les moyens d'enregistrement conservant en mémoire ledit premier groupe de données pendant ladite première durée prédéterminée.

9. Dispositif selon l'une quelconque des revendications 5 à 8, dans lequel l'indicateur graphique (34) représente un espace libre dans la zone de saisie (26) entre l'objet graphique courant et une partie vierge de la zone de saisie.

10. Dispositif selon l'une quelconque des revendications 1 à 9, dans lequel chaque dit objet graphique représente un symbole en écriture manuscrite.

11. Dispositif selon l'une quelconque des revendications 1 à 10, dans lequel, pour éditer un objet graphique (OG7), le module de traitement permet à l'utilisateur de sélectionner au moyen de l'écran tactile ledit objet graphique à éditer.

12. Dispositif selon la revendication 11, dans lequel ladite sélection est réalisée par l'application d'un point de contact sur l'écran tactile au niveau de l'objet graphique à éditer, ladite sélection déclenchant la sélection en tant que chaîne active de la chaîne (CS7) correspondante insérée dans le champ d'entrée.

13. Procédé de saisie mise en oeuvre par un dispositif de saisie (2) selon l'une quelconque des revendications 1 à 12 ledit dispositif étant apte à être utilisé par un utilisateur pour entrer des symboles dans un champ d'entrée (30) d'une application pouvant être exécutée sur ledit dispositif, le dispositif comprenant une interface comprenant un écran tactile (18), ladite interface permettant la saisie manuelle et l'affichage, dans une zone de saisie (26) dudit écran, d'objets graphiques (OG1-OG16),
le procédé comprenant un traitement d'objets graphiques, ledit traitement comprenant pour chaque objet graphique courant (OG1) :
• la détection d'un début de saisie et d'une fin de saisie dudit objet graphique courant (OG1) dans ladite zone de saisie (26) ;
• l'enregistrement, sur détection d'un début de saisie dudit objet graphique courant, des données graphiques (DG1) correspondant audit objet graphique courant tout au long de sa saisie ;
• la génération de chaînes candidates (C11-C14) d'au moins un symbole à partir desdites données graphiques (DG1), chacune desdites chaînes candidates étant associée à une valeur de pertinence (PN11-N14) représentative de la pertinence de ladite chaîne candidate vis-à-vis desdites données graphiques ; et
• l'insertion dans ledit champ d'entrée (30) d'une dite chaîne sélectionnée (CS1) par l'utilisateur dans ladite liste (LC1) ou, à défaut, une chaîne sélectionnée parmi lesdites chaînes candidates (C11-C14) en fonction de sa pertinence ;
• le stockage en mémoire, en association avec lesdites données graphiques (DG1), desdites chaînes candidates (C11-C14) et de leur valeur de pertinence associée (PN11-PN14), ainsi qu'un identifiant (ID1) de ladite chaîne sélectionnée (CS1), ladite association formant un premier groupe de données (GD1), et la conservation en mémoire dudit premier groupe de données pendant une première durée prédéterminée ; et
• l'édition d'une chaîne en cours d'affichage dans le champ d'entrée (30), le groupe de données de ladite chaîne éditée étant mis à jour et stocké en réponse à ladite édition,
dans lequel le procédé comprend, en réponse à une commande prédéterminée, postérieurement à ladite insertion de la chaîne sélectionnée dans ledit champ d'entrée, un remplacement dans le champ d'entrée de ladite chaîne sélectionnée par une autre chaîne candidate choisie par l'utilisateur parmi ladite liste de chaînes candidates conservée en mémoire dans le premier groupe de données.

14. Programme d'ordinateur (P) comportant des instructions pour l'exécution des étapes d'un procédé de configuration selon la revendication 13 lorsque ledit programme est exécuté par un ordinateur.

## Patentansprüche

1. Vorrichtung (2) zur Eingabe, die geeignet ist, von einem Benutzer verwendet zu werden, um Symbole in ein Feld (30) zur Eingabe einer Anwendung einzugeben, die auf dieser Vorrichtung ausgeführt werden kann, wobei die Vorrichtung Folgendes umfasst:
- eine Schnittstelleneinheit mit einem Touchscreen (18), wobei die Schnittstelleneinheit die manuelle Eingabe und die Anzeige von grafischen Objekten (OG1-OG16) in einem Eingabebereich (26) des Bildschirms ermöglicht; und
- ein Modul (4) zur Verarbeitung von grafischen Objekten, wobei das Modul zur Verarbeitung für die Verarbeitung jedes aktuellen grafischen Objekts Folgendes umfasst:
• eine Einheit zum Erfassen eines Eingabebeginns und eines Eingabeendes des aktuellen grafischen Objekts (OG1) in dem Eingabebereich (26);
• eine Einheit zum Aufzeichnen, die bei Erkennung eines Eingabebeginns des aktuellen grafischen Objekts geeignet ist, grafische Daten (DG1), die dem aktuellen grafischen Objekt (OG1) entsprechen, während seiner gesamten Eingabe aufzuzeichnen;
• eine Einheit zum Erkennen, die so konfiguriert ist, dass sie aus den grafischen Daten Kandidatenketten (C11-C14) von mindestens einem Symbol erzeugt, wobei jede der Kandidatenketten mit einem Relevanzwert (PN11-PN14) verknüpft ist, der die Relevanz der Kandidatenkette in Bezug auf die grafischen Daten darstellt; und
• eine Einheit zum Einfügen, die so konfiguriert ist, dass sie in das Feld (30) zur Eingabe einer vom Benutzer aus der Liste (LC1) ausgewählten Kette (CS1) einfügt oder alternativ eine Kette, die aufgrund ihrer Relevanz aus den in Frage kommenden Ketten ausgewählt wurde;
wobei die Aufzeichnungsmittel konfiguriert sind, um in Verbindung mit den grafischen Daten (DG1) die Kandidatenketten (C11-C14) und ihren zugehörigen Relevanzwert (PN11-PN14) sowie eine Kennung der ausgewählten Kette (ID1) zu speichern, wobei die Verbindung eine erste Datengruppe (GD1) bildet, und um die erste Datengruppe für eine erste vorbestimmte Zeit im Speicher zu halten;
wobei das Modul zur Verarbeitung so konfiguriert ist, dass es dem Benutzer ermöglicht, mittels der Schnittstelleneinheit eine Kette zu bearbeiten, die gerade in dem Feld (30) zur Eingabe angezeigt wird, wobei die Datengruppe der bearbeiteten Kette in Reaktion auf diese Bearbeitung durch das Modul zur Verarbeitung aktualisiert und durch die Aufzeichnungsmittel gespeichert wird,
wobei die Einheit zum Einfügen als Reaktion auf einen vorbestimmten Befehl nach dem Einfügen der ausgewählten Kette in das Feld zur Eingabe konfiguriert ist, um in dem Feld zur Eingabe die ausgewählte Kette durch eine andere Kandidatenkette zu ersetzen, die vom Benutzer aus der Liste von Kandidatenketten ausgewählt wird, die im Speicher in der ersten Datengruppe gehalten wird.

2. Vorrichtung nach Anspruch 1, wobei die Schnittstelleneinheit so konfiguriert ist, dass sie, wenn das Ende der Eingabe des aktuellen grafischen Objekts erkannt wurde und wenn innerhalb einer vorbestimmten Zeit ab der Erkennung des Eingabeendes kein Beginn der Eingabe eines nachfolgenden grafischen Objekts erkannt wurde, die Anzeige des aktuellen grafischen Objekts (OG4) in den Eingabebereich verschiebt, um in dem Eingabebereich (26) Platz für die Eingabe eines nachfolgenden grafischen Objekts (OG5) freizugeben.

3. Vorrichtung nach Anspruch 2, wobei die vorbestimmte Zeit von der Position des aktuellen grafischen Objekts (OG4) im Eingabebereich abhängt.

4. Vorrichtung nach Anspruch 2 oder 3, wobei die vorbestimmte Zeit von der kumulativen Länge des Verlaufs entlang der Haupt-Eingabeachse des oder der grafischen Objekte abhängt, die gerade in dem Eingabebereich (26) angezeigt werden.

5. Vorrichtung nach einem der Ansprüche 2 bis 4, wobei die Schnittstelleneinheit nach dem Verschieben so konfiguriert ist, dass sie in dem Eingabebereich (26) einen grafischen Indikator (34) anzeigt, der eine Region (36) des Eingabebereichs (26) bestimmt, die an das aktuelle grafische Objekt (OG4) angrenzt,
und wobei, wenn die Einheit zum Erfassen einen Beginn der Eingabe eines nachfolgenden grafischen Objekts in der Region erfasst, die Einheit zum Aufzeichnen so konfiguriert ist, dass sie die grafischen Daten (DG5) des nachfolgenden grafischen Objekts (OG5) während seiner gesamten Eingabe in Verbindung mit den grafischen Daten (OG4) der ersten Gruppe von Daten (DG4) aufzeichnet.

6. Vorrichtung nach einem der Ansprüche 2 bis 5, wobei die Schnittstelleneinheit nach dem Verschieben so konfiguriert ist, dass sie in dem Eingabebereich (26) einen grafischen Indikator (34) anzeigt, der eine Region (36) des Eingabebereichs bestimmt, die an das aktuelle grafische Objekt (OG5) angrenzt,
und wobei, wenn die Einheit zum Erfassen einen Eingabebeginn eines nachfolgenden grafischen Objekts außerhalb der Region (36) erfasst, die Einheit zum Aufzeichnen so konfiguriert ist, dass sie die grafischen Daten (DG6) des nachfolgenden grafischen Objekts (OG6) während seiner Eingabe in einer zweiten Datengruppe (GD6) aufzeichnet, die von der ersten Datengruppe (GD5) unabhängig ist.

7. Vorrichtung nach Anspruch 5 oder 6, wobei, wenn die Schnittstelleneinheit den Eingabebeginn des nachfolgenden grafischen Objekts außerhalb der Region (36) des Eingabebereichs (26) erfasst, die Einheit zum Einfügen die ausgewählte Kette validiert.

8. Vorrichtung nach Anspruch 7, bei der das Modul zur Verarbeitung nach einer zweiten vorbestimmten Zeitdauer ab der Validierung so konfiguriert ist, dass das aktuelle grafische Objekt (OG1-OG16) in Druckschrift angezeigt wird, wobei die Aufzeichnungseinrichtung die erste Gruppe von Daten während der ersten vorbestimmten Zeitdauer im Speicher hält.

9. Vorrichtung nach einem der Ansprüche 5 bis 8, wobei der grafische Indikator (34) einen freien Raum im Eingabebereich (26) zwischen dem aktuellen grafischen Objekt und einem leeren Teil des Eingabebereichs darstellt.

10. Vorrichtung nach einem der Ansprüche 1 bis 9, wobei jedes grafische Objekt ein Symbol in Handschrift darstellt.

11. Vorrichtung nach einem der Ansprüche 1 bis 10, wobei das Modul zur Verarbeitung zum Bearbeiten eines grafischen Objekts (OG7) dem Benutzer ermöglicht, mittels des Touchscreens das zu bearbeitende grafische Objekt auszuwählen.

12. Vorrichtung nach Anspruch 11, bei der die Auswahl durch Anwenden eines Berührungspunktes auf dem Touchscreen an dem zu bearbeitenden grafischen Objekt erfolgt, wobei diese Auswahl die Auswahl als aktive Kette der jeweiligen Kette (CS7) auslöst, die in das Feld zur Eingabe eingefügt wird.

13. Eingabeverfahren, das durch eine Eingabevorrichtung (2) nach einem der Ansprüche 1 bis 12 implementiert ist, wobei die Vorrichtung von einem Benutzer zum Eingeben von Symbolen in ein Feld (30) zur Eingabe einer Anwendung verwendet werden kann, die auf der Vorrichtung ausgeführt werden kann, wobei die Vorrichtung eine Schnittstelle umfasst, die einen Touchscreen (18) umfasst, wobei die Schnittstelle die manuelle Eingabe und Anzeige von grafischen Objekten (OG1-OG16) in einen Eingabebereich (26) des Touchscreens ermöglicht,
das Verfahren umfasst eine Verarbeitung von grafischen Objekten, wobei die Verarbeitung für jedes aktuelle grafische Objekt (OG1) Folgendes umfasst:
• Erfassen eines Eingabebeginns und eines Eingabeendes des aktuellen grafischen Objekts (OG1) in dem Eingabebereich (26);
• die Aufzeichnung von grafischen Daten (DG1), die dem aktuellen grafischen Objekt während seiner Eingabe entsprechen, bei Erkennung eines Eingabebeginns des aktuellen grafischen Objekts;
• Erzeugung von Kandidatenketten (C11-C14) von mindestens einem Symbol aus den grafischen Daten (DG1), wobei jede der Kandidatenketten einem RelevanzWert (PN11-N14) zugeordnet ist, der für die Relevanz der Kandidatenketten gegenüber den grafischen Daten repräsentativ ist; und
• das Einfügen einer vom Benutzer in der Liste (LC1) ausgewählten Kette (CS1) in das Feld (30) zur Eingabe oder, wenn dies nicht möglich ist, einer Kette, die entsprechend seiner Relevanz aus den Kandidatenketten (C11-C14) ausgewählt wurde;
• die Speicherung im Speicher, in Verbindung mit den grafischen Daten (DG1), der Kandidatenketten (C11-C14) und ihres dazugehörigen Relevanzwerts (PN11-PN14), sowie eine Kennung (ID1) der ausgewählten Kette (CS1), wobei die Verbindung eine erste Datengruppe (GD1) bildet, und die Speicherung der ersten Datengruppe für eine erste vorbestimmte Zeitdauer; und
• die Bearbeitung einer angezeigten Kette in dem Feld (30) zur Eingabe, wobei die Datengruppe der bearbeiteten Kette als Antwort auf die Bearbeitung aktualisiert und gespeichert wird,
wobei das Verfahren in Reaktion auf einen vorbestimmten Befehl nach dem Einfügen der ausgewählten Kette in das Feld zur Eingabe einen Ersatz in das Feld zur Eingabe der Kette durch eine andere Kandidatenkette umfasst, der von dem Benutzer aus der in der ersten Datengruppe gespeicherten Liste von Kandidatenketten ausgewählt wurde.

14. Computerprogramm (P) mit Befehlen zum Ausführen der Schritte eines Konfigurationsverfahrens nach Anspruch 13, wenn das Programm von einem Computer ausgeführt wird.

## Claims

1. An input device (2) able to be used by a user to enter symbols into an input field (30) of an application executable on said device, the device comprising:
- an interface unit comprising a touch screen (18), said interface unit enabling the manual input and display, in an input zone (26) of said screen, of graphical objects (OG1-OG16); and
- a graphical object processing module (4), said processing module comprising, for processing each current graphical object:
• a unit for detecting a start of inputting and an end of inputting said current graphical object (OG1) in said input zone (26);
• a recording unit able, upon detecting a start of inputting said current graphical object, to record graphical data (DG1) corresponding to said current graphical object (OG1) during all the time it is input;
• a recognition unit configured to generate candidate strings (C11-C14) of at least one symbol from said graphical data, each of said candidate strings being associated with a relevance value (PN11-PN14) representative of the relevance of said candidate string to said graphical data; and
• an insertion unit configured to insert into said input field (30) a string selected (CS1) by the user from said list (LC1) or, by default, a string selected from said candidate strings as a function of its relevance;
wherein the recording means are configured to store, in association with said graphical data (DG1), said candidate strings (C11-C14) and their associated relevance value (PN11-PN14), as well as an identifier of said string selected (ID1), said association forming a first data group (GD1), and to keep said first data group in memory for a first predetermined period of time;
wherein the processing module is configured to allow the user to edit by means of the interface unit a string currently displayed in the input field (30), the data group of said string edited being updated in response to this editing by the processing module and stored by the recording means,
wherein the insertion unit is configured, in response to a predetermined command, subsequent to said insertion of the string selected into said input field, to replace in the input field said string selected with another candidate string selected by the user from said list of candidate strings kept in memory in the first data group.

2. The device according to claim 1, the interface unit being configured, when the end of inputting the current graphical object has been detected and if no start of inputting a subsequent graphical object has been detected within a predetermined time from said detection of end of inputting, to shift display of the current graphical object (OG4) in the input zone so as to free up space in said input zone (26) for input of a subsequent graphical object (OG5).

3. The device according to claim 2, wherein the predetermined time is a function of the position of the current graphical object (OG4) in the input zone.

4. The device according to claim 2 or 3, wherein the predetermined time is a function of the cumulative length of the plot along the main input axis of the current graphical object(s) currently displayed in the input zone (26).

5. The device according to any of claims 2 to 4, wherein the interface unit is configured, once said shift has been performed, to display in the input zone (26) a graphical indicator (34) defining a region (36) of the input zone (26) adjacent to the current graphical object (OG4),
and wherein, if the detection unit detects a start of inputting a subsequent graphical object in said region, the recording unit is configured to record the graphical data (DG5) of the subsequent graphical object (OG5) during all the time it is input in association with the graphical data (OG4) of the first data group (DG4).

6. The device according to any of claims 2 to 5, wherein the interface unit is configured, once said offset has been performed, to display in the input zone (26) a graphical indicator (34) defining a region (36) of the input zone adjacent to the current graphical object (OG5),
and wherein, if the detection unit detects a start of inputting a subsequent graphical object outside said region (36), the recording unit is configured to record the graphical data (DG6) of the subsequent graphical object (OG6) during all the time it is input in a second data group (GD6) independent of said first data group (GD5).

7. The device according to claim 5 or 6, wherein, if the interface unit detects the start of inputting the subsequent graphical object outside said region (36) of the input zone (26), the insertion unit validates said string selected.

8. The device according to claim 7, wherein the processing module is configured, after a second predetermined period of time from said validation, to cause the current graphical object (OG1-OG16) to be displayed in print letters, the storage means keeping said first data group in memory for said first predetermined period of time.

9. The device according to any of claims 5 to 8, wherein the graphical indicator (34) represents a free space in the input zone (26) between the current graphical object and a blank part of the input zone.

10. The device according to any of claims 1 to 9, wherein each said graphical object represents a handwritten symbol.

11. The device according to any of claims 1 to 10, wherein, to edit a graphical object (OG7), the processing module enables the user to select said graphical object to be edited by means of the touch screen.

12. The device according to claim 11, wherein said selection is performed by applying a touch point on the touch screen at the graphical object to be edited, said selection triggering selection as an active string of the corresponding string (CS7) inserted into the input field.

13. An input method implemented by an input device (2) according to any of claims 1 to 12, said device being able to be used by a user to enter symbols in an input field (30) of an application that can be executed on said device, the device comprising an interface comprising a touch screen (18), said interface allowing manual input and display, in an input zone (26) of said screen, of graphical objects (OG1-OG16),
the method comprising processing graphical objects, said processing comprising, for each current graphical object (OG1):
• detecting a start of inputting and an end of inputting said current graphical object (OG1) in said input zone (26);
• recording, upon detecting a start of inputting said current graphical object, the graphical data (DG1) corresponding to said current graphical object during all the time it is input;
• generating candidate strings (C11-C14) of at least one symbol from said graphical data (DG1), each of said candidate strings being associated with a relevance value (PN11-N14) representative of the relevance of said candidate string with respect to said graphical data; and
• inserting into said input field (30) a said string selected (CS1) by the user from said list (LC1) or, by default, a string selected from said candidate strings (C11-C14) as a function of its relevance;
• storing in memory, in association with said graphical data (DG1), said candidate strings (C11-C14) and their associated relevance value (PN11-PN14), as well as an identifier (ID1) of said string selected (CS1), said association forming a first data group (GD1), and keeping said first data group in memory for a first predetermined period of time; and
• editing a string currently displayed in the input field (30), the data group of said string edited being updated and stored in response to said editing,
wherein the method comprises, in response to a predetermined command, subsequent to said insertion of the string selected into said input field, replacing in the input field said string selected with another candidate string selected by the user from said list of candidate strings kept in memory in the first data group.

14. A computer program (P) including instructions for executing the steps of a configuration method according to claim 13 when said program is executed by a computer.
